# EUROPEAN PATENT APPLICATION

(11) **EP 4 808 242 A1**
(43) Date of publication of application: **16.09.2026**
(21) Application number: 24896337.3
(22) Date of filing: 19.11.2024
(51) Int. Cl.: H04W 72/0453

(54) **INTERFERENCE ELIMINATION METHOD AND COMMUNICATION APPARATUS**

(30) Priority: 29.11.2023 CN 202311626887
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); XIE, Xinqian, Shenzhen, Guangdong 518129 (CN); LIU, Liehai, Shenzhen, Guangdong 518129 (CN)
(74) Representative: Pfenning, Meinig & Partner mbB
(86) International application number: PCT/CN2024/132949
(87) International publication number: WO 2025/113246

(57) **Abstract**

The present application provides a method and communication apparatus for interference cancellation. The method comprises: a first network device sending first indication information to a first terminal device, wherein the first indication information indicates at least one of: resource allocation for the first terminal device on at least one first resource of a first frequency resource, first filter information, or first antenna information, wherein the first frequency resource comprises a plurality of first resources, and any two first resources are non-contiguous. The method of the present application allows the first network device to adjust allocation positions of frequency resources for the first terminal device and indicate the first filter information and the first antenna information for the first terminal device to receive signals, such that the first terminal device may obtain resource allocation positions on at least one first resource, and filter information for receiving signals on the first resource or first antenna information for receiving signals on the first resource, thereby eliminating interference from a different operator on the received signal of the first terminal device.

## Description

This application claims priority to Chinese Patent Application No. 2023116268870, entitled "Method and Communication Apparatus for Interference Cancellation," filed with the China National Intellectual Property Administration on November 29, 2023, the entire contents of which are incorporated herein by reference.

### TECHNICAL FIELD

The present application relates to the field of communication technologies, and more specifically, to a method and communication apparatus for interference cancellation.

### BACKGROUND ART

In inter-operator broadband communication schemes, there exist scenarios where Operator A and Operator B jointly occupy contiguous frequency resources, and the frequency band resources of Operator A may be distributed on both sides of the frequency band resources of another Operator B. When a terminal device communicating on the network of Operator A receives signals using a broadband filter comprising contiguous frequency resources, the received signal of Operator A contains interference from transmission signals of Operator B or terminal devices communicating on Operator B. Therefore, how to eliminate such interference is a matter of current concern.

### SUMMARY

The present application provides a method and communication apparatus for interference cancellation. In this method, a base station indicates a terminal device to measure and report interference from a different operator; the base station adjusts resource allocation to the terminal device based on the degree of interference and indicates the terminal device to receive signals using either a broadband filter or a narrowband filter, thereby eliminating interference caused by a different operator on the received signal of the terminal device.

In a first aspect, a method for interference cancellation is provided. The method of the first aspect may be performed by a first network device, or may be performed by a chip configured in the first network device. The present application imposes no limitation in this regard.

Specifically, the method comprises: sending, to a first terminal device, first indication information, wherein the first indication information indicates at least one of: resource allocation for the first terminal device on at least one first resource of a first frequency resource, first filter information, or first antenna information; wherein the first frequency resource comprises a plurality of first resources, and any two first resources among the plurality of first resources are non-contiguous.

In the interference cancellation method of the first aspect, the first network device may adjust allocation positions of frequency resources for the first terminal device and indicate the first filter information and the first antenna information for the first terminal device to receive signals, such that the first terminal device may obtain resource allocation positions on the at least one first resource as well as filter information for receiving signals on the at least one first resource or the first antenna information for receiving signals on the at least one first resource, thereby eliminating interference from a different operator on the received signal of the first terminal device.

It should be noted that the first network device belongs to a first operator, the second network device belongs to a second operator, the first terminal device communicates on the first operator, the first frequency resource comprises frequency resources occupied by the first operator and frequency resources occupied by the second operator, and the frequency resources occupied by the first operator on the first frequency resource are non-contiguous.

It should be understood that the second indication information is determined based on interference from the second network device to the first terminal device; the interference from the second network device to the received signal of the first terminal device further includes interference from a second terminal device communicating on the second network device to the received signal of the first terminal device. Alternatively, the interference may also include interference from other network devices or terminal devices communicating on other networks to the received signal of the first terminal device. The embodiments of the present application impose no specific limitation on the source of the interference.

It should further be noted that the first frequency resource may also include additional operators. The embodiments of the present application impose no specific limitation on operators accessing the non-contiguous frequency resources occupied by the first operator on the first frequency resource.

It should be understood that resources within a first resource may be contiguous or non-contiguous. The embodiments of the present application impose no limitation in this regard.

In one possible implementation of the first aspect, the first filter information comprises one or more filter bandwidths, and the one or more filter bandwidths comprise a frequency resource size of at least one first resource or a frequency resource size of allocated resources on at least one first resource.

In this implementation, the first network device may indicate, to the first terminal device, a narrowband filter bandwidth such that the first terminal device receives signals based on the narrowband filter bandwidth, avoiding reception of signals on the spectrum of the other operator, thereby avoiding or reducing interference from the other operator on the received signal of the first terminal device; or the first network device may indicate, to the first terminal device, two narrowband filter bandwidths such that the first terminal device receives signals based on the two narrowband filter bandwidths, avoiding reception of signals on the spectrum of the other operator, thereby avoiding or reducing interference from the other operator on the received signal of the first terminal device; or the first network device may indicate, to the first terminal device, a plurality of narrowband filter bandwidths. It should be understood that the plurality of narrowband filter bandwidths do not include all the first resources, that is, when the first terminal device receives signals based on the plurality of narrowband filters, signals on the spectrum of the other operator are not received, thereby avoiding or reducing interference from the other operator on the received signal of the first terminal device.

It should be noted that one filter bandwidth may be a frequency resource size of at least one first resource, or one filter bandwidth may be a frequency resource size of allocated resources on at least one first resource. Alternatively, one filter bandwidth may also be greater than the frequency resource size of the first resource and less than the sum of the frequency resource size of the first resource and a second threshold, or one filter bandwidth may be greater than the frequency resource size of allocated resources on the first resource and less than the sum of the frequency resource size of allocated resources on the first resource and the second threshold. It should be understood that the second threshold may be a predefined filter bandwidth tolerance.

In one possible implementation of the first aspect, a first association relationship exists between the one or more filter bandwidths and the first resource or the allocated resources on the first resource.

The first association relationship indicates that, when a filter corresponding to a filter bandwidth allocated by the first network device to the first terminal device is used on a corresponding first resource, a frequency center of the filter is aligned with a frequency center of the first resource; or the first association relationship indicates that, when a filter corresponding to a filter bandwidth allocated by the first network device to the first terminal device is used on allocated resources of the corresponding first resource, a frequency center of the filter is aligned with a frequency center of the allocated resources of the first resource.

In one possible implementation of the first aspect, the first antenna information comprises one or more of the following: antenna port, transmission configuration indication (TCI), sounding reference signal (SRS) request, and demodulation reference signal (DMRS) sequence initialization information. The number of the first antenna information is one or more, and the first antenna information is applied to at least one first resource or allocated resources of at least one first resource.

In this implementation, the first antenna information may be plural; that is, in the embodiments of the present application, when the first network device allocates resources on two non-contiguous first resources, the first network device needs to indicate, via one DCI or MAC CE signaling, the antenna ports, precoding information, TCI, SRS request, and DMRS sequence initialization information on the two first resources, respectively.

In one possible implementation of the first aspect, a second association relationship exists between the one or more first antenna information and the first resource or the allocated resources on the first resource. In this implementation, the first network device sends the first antenna information to the first terminal device based on positions of the first resources or positions of allocated resources on the first resources.

In one possible implementation of the first aspect, when the interference is greater than or greater than or equal to a first threshold, the resource allocation on the at least one first resource of the first frequency resource comprises: allocating resources on one first resource among the plurality of first resources, and the first filter information comprises: the bandwidth of the filter comprises a frequency resource size of one first resource or a frequency resource size of allocated resources on one first resource. In this implementation, when the degree of interference from the second operator to the received signal of the first terminal device is large, the first network device may allocate resources on any one of two non-contiguous first resources occupied by the first operator, and the first network device indicates the first terminal device to receive signals using a filter bandwidth equal to the frequency resource size of the first resource on the first resource being used for communication, or the first network device indicates the first terminal device to receive signals using a filter bandwidth equal to the frequency resource size of allocated resources on the first resource on the allocated resources of the first resource being used for communication, thereby eliminating strong interference from the second network device to the received signal of the first terminal device.

It should be noted that the interference being greater than or equal to the first threshold may be understood as a parameter characterizing the interference being greater than or greater than or equal to the first threshold. The parameter characterizing the interference may be RSRP, RSRQ, or RSSI, and the parameter characterizing the interference may also be another power metric of a reference signal. The embodiments of the present application impose no specific limitation in this regard.

It should further be noted that the first threshold may be determined based on a specific interference parameter. The embodiments of the present application impose no limitation in this regard.

In one possible implementation of the first aspect, when the interference is greater than or greater than or equal to the first threshold, the resource allocation on the at least one first resource of the first frequency resource comprises: allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information. In this implementation, when the degree of interference from the second operator to the first terminal device is large, the first network device may allocate resources on two non-contiguous first resources occupied by the first operator, and the first network device indicates the first terminal device to receive signals using a frequency resource size of one first resource or a frequency resource size of allocated resources on one first resource on each of the two first resources being used for communication, respectively, thereby eliminating strong interference from the second network device to the received signal of the first terminal device.

In one possible implementation of the first aspect, the two first resources or the allocated resources on the two first resources correspond to different antenna ports. In this implementation, since the first network device allocates resources to the first terminal device on each of the two first resources respectively and indicates the first terminal device to receive signals using two narrowband filters, the first network device needs to indicate, to the first terminal device respectively, different antenna ports corresponding to receiving signals on the two first resources or the allocated resources on the two first resources.

In one possible implementation of the first aspect, the two first resources or the allocated resources on the two first resources correspond to identical antenna ports.

In one possible implementation of the first aspect, the sum of the number of antenna ports corresponding to the two first resources or the allocated resources on the two first resources is less than or less than or equal to a maximum number of antenna ports of the first terminal device. In this implementation, since the first network device allocates resources to the first terminal device on each of the two first resources respectively and indicates the first terminal device to receive signals using two narrowband filters, the maximum number of streams for each signal is limited and cannot reach the maximum number of streams. Therefore, the first network device may indicate, to the first terminal device, the number of antenna ports for receiving signals, and the sum of the number of antenna ports corresponding to the two first resources or the allocated resources on the two first resources is less than or less than or equal to the maximum number of antenna ports of the first terminal device.

In one possible implementation of the first aspect, the number of antenna ports corresponding to the two first resources or the allocated resources on the two first resources is less than or equal to half of the maximum number of antenna ports of the first terminal device. In this implementation, since the first network device allocates resources to the first terminal device on each of the two first resources respectively and uses identical ports, and indicates the first terminal device to receive signals using two narrowband filters, signals on the two resources carry identical information and the maximum number of streams for the signals is limited to at most half of the maximum number of streams. Therefore, the first network device may indicate, to the first terminal device, the number of antenna ports for receiving signals, and the number of antenna ports corresponding to the two first resources or the allocated resources on the two first resources is identical and each is less than or less than or equal to half of the maximum number of antenna ports of the first terminal device.

In one possible implementation of the first aspect, the method further comprises: the first network device sending, to the first terminal device, second indication information, wherein the second indication information indicates the first terminal device to measure and report interference from the second network device to the received signal of the first terminal device. The first network device belongs to the first operator, the second network device belongs to the second operator, the first terminal device communicates on the first operator, the first frequency resource comprises the frequency resources occupied by the first operator and the frequency resources occupied by the second operator, and the frequency resources occupied by the first operator on the first frequency resource are non-contiguous. In this implementation, the first network device may indicate, to the first terminal device, measurement and reporting of interference from other operators to the received signal of the first terminal device, and the first network device determines the first indication information based on interference measurement results measured and reported by the first terminal device.

Optionally, the second indication information from the first network device to the first terminal device may further include a measurement object of the interference signal and a measurement position of the interference signal, that is, a temporal and/or frequency domain position occupied by the interference signal.

In a second aspect, a method for interference cancellation is provided. The method of the second aspect may be performed by the first terminal device, or may be performed by a chip configured in the first terminal device. The present application imposes no limitation in this regard.

Specifically, the method comprises: the first terminal device receiving first indication information from the first network device, wherein the first indication information indicates at least one of: resource allocation for the first terminal device on at least one first resource of a first frequency resource, first filter information, or first antenna information, wherein the first frequency resource comprises a plurality of first resources, and any two first resources among the plurality of first resources are non-contiguous. Determining at least one of the following based on the first indication information: resource allocation information on the at least one first resource of the first frequency resource, the first filter information for receiving signals on the at least one first resource, or the first antenna information for receiving signals on the at least one first resource.

In the interference cancellation method of the second aspect, the first terminal device may receive, from the first network device, allocation positions of frequency resources on the at least one first resource as well as the first filter information for receiving signals on the at least one first resource and the first antenna information for receiving signals on the at least one first resource. Based on the resource allocation positions on the at least one first resource as well as the filter information for receiving signals on the at least one first resource or the first antenna information for receiving signals on the at least one first resource, the first terminal device may eliminate interference from a different operator when receiving signals.

It should be noted that the first network device belongs to a first operator, the second network device belongs to a second operator, the first terminal device communicates on the first operator, the first frequency resource comprises frequency resources occupied by the first operator and frequency resources occupied by the second operator, and the frequency resources occupied by the first operator on the first frequency resource are non-contiguous.

It should be understood that the second indication information is determined based on interference from the second network device to the first terminal device; the interference from the second network device to the received signal of the first terminal device further includes interference from a second terminal device communicating on the second network device to the received signal of the first terminal device. Alternatively, the interference may also include interference from other network devices or terminal devices communicating on other networks to the received signal of the first terminal device. The embodiments of the present application impose no specific limitation on the source of the interference.

It should further be noted that the first frequency resource may also include additional operators. The embodiments of the present application impose no specific limitation on operators accessing the non-contiguous frequency resources occupied by the first operator on the first frequency resource.

It should be understood that resources within a first resource may be contiguous or non-contiguous. The embodiments of the present application impose no limitation in this regard.

In one possible implementation of the second aspect, the first filter information comprises one or more filter bandwidths, and the one or more filter bandwidths comprise a frequency resource size of at least one first resource or a frequency resource size of allocated resources on at least one first resource.

In this implementation, the first network device may indicate, to the first terminal device, a narrowband filter bandwidth such that the first terminal device receives signals based on the narrowband filter bandwidth, avoiding reception of signals on the spectrum of the other operator, thereby avoiding or reducing interference from the other operator on the received signal of the first terminal device; or the first network device may indicate, to the first terminal device, two narrowband filter bandwidths such that the first terminal device receives signals based on the two narrowband filter bandwidths, avoiding reception of signals on the spectrum of the other operator, thereby avoiding or reducing interference from the other operator on the received signal of the first terminal device; or the first network device may indicate, to the first terminal device, a plurality of narrowband filter bandwidths. It should be understood that the plurality of narrowband filter bandwidths do not include all the first resources, that is, when the first terminal device receives signals based on the plurality of narrowband filters, signals on the spectrum of the other operator are not received, thereby avoiding or reducing interference from the other operator on the received signal of the first terminal device.

It should be noted that one filter bandwidth may be a frequency resource size of at least one first resource, or one filter bandwidth may be a frequency resource size of allocated resources on at least one first resource. Alternatively, one filter bandwidth may also be greater than the frequency resource size of the first resource and less than the sum of the frequency resource size of the first resource and a second threshold, or one filter bandwidth may be greater than the frequency resource size of allocated resources on the first resource and less than the sum of the frequency resource size of allocated resources on the first resource and the second threshold. It should be understood that the second threshold may be a predefined filter bandwidth tolerance.

In one possible implementation of the second aspect, a first association relationship exists between the one or more filter bandwidths and the first resource or the allocated resources on the first resource.

The first association relationship indicates that, when a filter corresponding to a filter bandwidth allocated by the first network device to the first terminal device is used on a corresponding first resource, a frequency center of the filter is aligned with a frequency center of the first resource; or the first association relationship indicates that, when a filter corresponding to a filter bandwidth allocated by the first network device to the first terminal device is used on allocated resources of the corresponding first resource, a frequency center of the filter is aligned with a frequency center of the allocated resources of the first resource.

In one possible implementation of the second aspect, the first antenna information comprises one or more of the following: antenna port, transmission configuration indication (TCI), sounding reference signal (SRS) request, and demodulation reference signal (DMRS) sequence initialization information. The number of the first antenna information is one or more, and the first antenna information is applied to at least one first resource or allocated resources of at least one first resource.

In this implementation, the first antenna information may be plural; that is, in the embodiments of the present application, when the first network device allocates resources on two non-contiguous first resources, the first network device needs to indicate, via one DCI or MAC CE signaling, the antenna ports, precoding information, TCI, SRS request, and DMRS sequence initialization information on the two first resources, respectively.

In one possible implementation of the second aspect, a second association relationship exists between the one or more first antenna information and the first resource or the allocated resources on the first resource. In this implementation, the first network device sends the first antenna information to the first terminal device based on positions of the first resources or positions of allocated resources on the first resources.

In one possible implementation of the second aspect, when the interference is greater than or greater than or equal to a first threshold, the resource allocation on the at least one first resource of the first frequency resource comprises: allocating resources on one first resource among the plurality of first resources, and the first filter information comprises: the bandwidth of the filter comprises a frequency resource size of one first resource or a frequency resource size of allocated resources on one first resource. In this implementation, when the degree of interference from the second operator to the received signal of the first terminal device is large, the first network device may allocate resources on any one of two non-contiguous first resources occupied by the first operator, and the first network device indicates the first terminal device to receive signals using a filter bandwidth equal to the frequency resource size of the first resource on the first resource being used for communication, or the first network device indicates the first terminal device to receive signals using a filter bandwidth equal to the frequency resource size of allocated resources on the first resource on the allocated resources of the first resource being used for communication, thereby eliminating strong interference from the second network device to the received signal of the first terminal device.

It should be noted that the interference being greater than or equal to the first threshold may be understood as a parameter characterizing the interference being greater than or greater than or equal to the first threshold. The parameter characterizing the interference may be RSRP, RSRQ, or RSSI, and the parameter characterizing the interference may also be another power metric of a reference signal. The embodiments of the present application impose no specific limitation in this regard.

It should further be noted that the first threshold may be determined based on a specific interference parameter. The embodiments of the present application impose no limitation in this regard.

In one possible implementation of the second aspect, when the interference is greater than or greater than or equal to the first threshold, the resource allocation on the at least one first resource of the first frequency resource comprises: allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information. In this implementation, when the degree of interference from the second operator to the first terminal device is large, the first network device may allocate resources on two non-contiguous first resources occupied by the first operator, and the first network device indicates the first terminal device to receive signals using a frequency resource size of one first resource or a frequency resource size of allocated resources on one first resource on each of the two first resources being used for communication, respectively, thereby eliminating strong interference from the second network device to the received signal of the first terminal device.

In one possible implementation of the second aspect, the two first resources or the allocated resources on the two first resources correspond to different antenna ports. In this implementation, since the first network device allocates resources to the first terminal device on each of the two first resources respectively and indicates the first terminal device to receive signals using two narrowband filters, the first network device needs to indicate, to the first terminal device respectively, different antenna ports corresponding to receiving signals on the two first resources or the allocated resources on the two first resources.

In one possible implementation of the second aspect, the sum of the number of antenna ports corresponding to the two first resources or the allocated resources on the two first resources is less than or less than or equal to a maximum number of antenna ports of the first terminal device. In this implementation, since the first network device allocates resources to the first terminal device on each of the two first resources respectively and indicates the first terminal device to receive signals using two narrowband filters, the maximum number of streams for each signal is limited and cannot reach the maximum number of streams. Therefore, the first network device may indicate, to the first terminal device, the number of antenna ports for receiving signals, and the sum of the number of antenna ports corresponding to the two first resources or the allocated resources on the two first resources is less than or less than or equal to the maximum number of antenna ports of the first terminal device.

In one possible implementation of the second aspect, the two first resources or the allocated resources on the two first resources correspond to identical antenna ports.

In one possible implementation of the second aspect, the number of antenna ports corresponding to the two first resources or the allocated resources on the two first resources is less than or equal to half of the maximum number of antenna ports of the first terminal device. In this implementation, since the first network device allocates resources to the first terminal device on each of the two first resources respectively and uses identical ports, and indicates the first terminal device to receive signals using two narrowband filters, signals on the two resources carry identical information and the maximum number of streams for the signals is limited to at most half of the maximum number of streams. Therefore, the first network device may indicate, to the first terminal device, the number of antenna ports for receiving signals, and the number of antenna ports corresponding to the two first resources or the allocated resources on the two first resources is identical and each is less than or less than or equal to half of the maximum number of antenna ports of the first terminal device.

In one possible implementation of the second aspect, the method further comprises: the first terminal device receiving second indication information from the first network device; measuring and reporting interference from the second network device to the received signal of the first terminal device based on the second indication information. The first network device belongs to the first operator, the second network device belongs to the second operator, the first terminal device communicates on the first operator, the first frequency resource comprises the frequency resources occupied by the first operator and the frequency resources occupied by the second operator, and the frequency resources occupied by the first operator on the first frequency resource are non-contiguous. In this implementation, the first terminal device receives, from the first network device, an indication to measure and report interference from other operators to the received signal of the first terminal device, and the first network device determines the first indication information based on interference measurement results measured and reported by the first terminal device.

Optionally, the second indication information from the first network device to the first terminal device may further include a measurement object of the interference signal and a measurement position of the interference signal, that is, a temporal and/or frequency domain position occupied by the interference signal.

In a third aspect, a communication system is provided. The system comprises a first network device and a first terminal device. The first network device is configured to perform the method of any one of the above first aspect or possible implementations thereof, and the first terminal device is configured to perform the method of any one of the above second aspect or possible implementations thereof.

In a fourth aspect, a communication apparatus is provided. The communication apparatus comprises means for performing the respective steps of the method of any one of the above first aspect or possible implementations thereof, or the respective steps of the method of any one of the above second aspect or possible implementations thereof.

In a fifth aspect, a communication apparatus is provided. The communication apparatus comprises at least one processor and a memory, the processor and the memory being coupled. The memory stores program instructions, and when the program instructions stored in the memory are executed by the processor, the method of any one of the above first aspect or possible implementations thereof is performed, or the method of any one of the above second aspect or possible implementations thereof is performed.

In a sixth aspect, a communication apparatus is provided. The communication apparatus comprises at least one processor and an interface circuit. The at least one processor is configured to perform the method of any one of the above first aspect or possible implementations thereof, or the method of any one of the above second aspect or possible implementations thereof.

In a seventh aspect, a computer program product is provided. The computer program product comprises a computer program. When the computer program is executed by a processor, the method of any one of the above first aspect or possible implementations thereof is performed, or the method of any one of the above second aspect or possible implementations thereof is performed.

In an eighth aspect, a computer-readable storage medium is provided. A computer program is stored on the computer-readable storage medium. When the computer program is executed, the method of any one of the above first aspect or possible implementations thereof is performed, or the method of any one of the above second aspect or possible implementations thereof is performed.

In a ninth aspect, a chip is provided. The chip comprises: a processor, configured to invoke and run a computer program from a memory such that a communication device equipped with the chip performs the method of any one of the above first aspect or possible implementations thereof, or the method of any one of the above second aspect or possible implementations thereof.

### BRIEF DESCRIPTION OF DRAWINGS

Figure 1 illustrates a schematic diagram of inter-operator broadband communication in the related art.
Figure 2 illustrates a schematic diagram of an example communication system provided by an embodiment of the present application.
Figure 3 illustrates a structural schematic diagram of a network device 20 and a terminal device 30 provided by an embodiment of the present application.
Figure 4 illustrates a communication protocol stack structure of a network device 20 and a terminal device 30 provided by an embodiment of the present application.
Figure 5 illustrates a schematic interaction diagram of an example interference cancellation method 500 provided by an embodiment of the present application.
Figure 6 illustrates a schematic diagram of an example interference measurement and resource utilization provided by an embodiment of the present application.
Figure 7 illustrates a schematic diagram of another example interference measurement and resource utilization provided by an embodiment of the present application.
Figure 8 illustrates a schematic diagram of yet another example interference measurement and resource utilization provided by an embodiment of the present application.
Figure 9 illustrates a schematic block diagram of a communication apparatus 900 provided by an embodiment of the present application.
Figure 10 illustrates a schematic block diagram of another example communication apparatus 1000 provided by an embodiment of the present application.
Figure 11 illustrates a schematic block diagram of a communication apparatus 1100 provided by an embodiment of the present application.
Figure 12 illustrates a schematic block diagram of another example communication apparatus 1200 provided by an embodiment of the present application.
Figure 13 illustrates a structural schematic diagram of a terminal device 1300 provided by the present application.
Figure 14 illustrates a structural schematic diagram of a network device 1400 provided by an embodiment of the present application.
Figure 15 illustrates a schematic diagram of a chip system provided by an embodiment of the present application.

### DESCRIPTION OF EMBODIMENTS

The technical solutions of the present application will be described below in conjunction with the drawings.

The technical solutions of the embodiments of the present application may be applied to various communication systems, such as: a Global System for Mobile Communications (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, a Universal Mobile Telecommunication System (UMTS), a Worldwide Interoperability for Microwave Access (WiMAX) communication system, a future fifth generation (5G) system, a New Radio (NR) system, or the like.

The terminal device in the embodiments of the present application may refer to a user equipment, an access terminal, a subscriber unit, a subscriber station, a mobile station, a mobile unit, a remote station, a remote terminal, a mobile device, a user terminal, a terminal, a wireless communication device, a user agent, or a user apparatus. The terminal device may also be a cellular telephone, a cordless telephone, a Session Initiation Protocol (SIP) telephone, a Wireless Local Loop (WLL) station, a Personal Digital Assistant (PDA), a handheld device having a wireless communication function, a computing device or another processing device connected to a wireless modem, a vehicle-mounted device, a wearable device, a terminal device in a future 5G network, or a terminal device in a future evolved Public Land Mobile Network (PLMN). The embodiments of the present application impose no limitation in this regard.

The network device in the embodiments of the present application may be a device for communicating with a terminal device. The network device may be a Base Transceiver Station (BTS) in a GSM system or a CDMA system, a base station (NodeB, NB) in a WCDMA system, an evolved base station (eNB or eNodeB) in an LTE system, a radio controller in a Cloud Radio Access Network (CRAN) scenario, or the network device may be a relay station, an access point, a vehicle-mounted device, a wearable device, a network device in a future 5G network, or a network device in a future evolved PLMN network. The embodiments of the present application impose no limitation in this regard.

In the embodiments of the present application, the terminal device or the network device comprises a hardware layer, an operating system layer running above the hardware layer, and an application layer running on the operating system layer. The hardware layer comprises hardware such as a Central Processing Unit (CPU), a Memory Management Unit (MMU), and a memory (also referred to as main memory). The operating system may be any one or more computer operating systems that implement business processing through processes, such as a Linux operating system, a Unix operating system, an Android operating system, an iOS operating system, or a Windows operating system. The application layer comprises applications such as a browser, an address book, word processing software, and instant messaging software. Furthermore, the present application imposes no particular limitation on the specific structure of the execution entity of the method provided in the embodiments of the present application, provided that the method for communication according to the embodiments of the present application can be implemented by running a program that records the code of the method provided in the embodiments of the present application. For example, the execution entity of the method provided in the embodiments of the present application may be a terminal device or a network device, or may be a functional module within the terminal device or the network device that can invoke and execute a program.

Furthermore, the terms "article of manufacture," "computer-readable medium," and the like as used herein refer to a computer program accessible from any computer-readable device, carrier, or medium. For example, computer-readable media may include, but are not limited to: magnetic storage devices (e.g., hard disks, floppy disks, or magnetic tapes), optical discs (e.g., Compact Discs (CDs), Digital Versatile Discs (DVDs)), smart cards, and flash memory devices (e.g., Erasable Programmable Read-Only Memory (EPROM), cards, sticks, or key drives). In addition, the various storage media described herein may represent one or more devices and/or other machine-readable media for storing information. The term "machine-readable medium" may include, without limitation, wireless channels and various other media capable of storing, containing, and/or carrying instructions and/or data.

The existing communication network architecture is increasingly diversified. Multiple different cells often overlap in coverage in the same area. For example, different operators may each set up their own base stations in the same area to provide services for terminal devices of that operator within the area. Different base stations belong to different operators. In an inter-operator broadband communication scheme, the frequency band resources of Operator A may be distributed on both sides of the frequency band resources of another Operator B. When a terminal device communicating on Operator A uses a broadband filter to filter signals across the two segments of spectrum of Operator A, signal power from the spectrum of Operator B located between the two segments of spectrum of Operator A may leak into the spectrum of Operator A due to non-linear operations in signal reception and processing. That is, the terminal device using the broadband filter cannot filter out this interference. Therefore, the terminal device communicating on the frequency band resources of Operator A may be subject to interference from communication on the frequency band resources of Operator B, resulting in inter-link interference between different operators.

It should be understood that a filter is one of the most commonly used and important devices in a mobile communication base station, located at the front end of a radio frequency module. It is a passive, linear, two-port network having frequency selection characteristics. It filters electromagnetic wave signals, allowing frequency signals in a passband to pass through smoothly while suppressing unwanted frequency signals. Its main purpose is to solve interference problems between different frequency bands and different standards. A filter presents a matched state to bandpass signals and presents a large mismatch to out-of-band frequency signals, with large signal reflection attenuation, thereby achieving a spectrum filtering function. By utilizing the frequency selection function of a filter, interfering noise can be filtered out or spectrum analysis can be performed. In other words, any device or system that can allow a specific frequency in a signal to pass through while greatly attenuating or suppressing other frequencies is referred to as a filter.

A filter can be classified as a broadband filter or a narrowband filter. Broadband filters and narrowband filters are two different types of filters, and their main differences lie in their bandwidth and passband response characteristics. A broadband filter has a relatively wide bandwidth range and can transmit signals within a large broadband range while adjusting and limiting the amplitude of in-band signals. It can filter out unwanted frequency components while transmitting desired frequency components to an output port by processing signals within a relatively wide frequency range. It typically has a relatively flat passband response and small in-band ripple. Conversely, a narrowband filter has a relatively narrow bandwidth range. It can filter out unwanted frequency components while transmitting desired frequency components to an output port. It typically has relatively steep filtering characteristics and small out-of-band attenuation, and is suitable for applications requiring precise filtering.

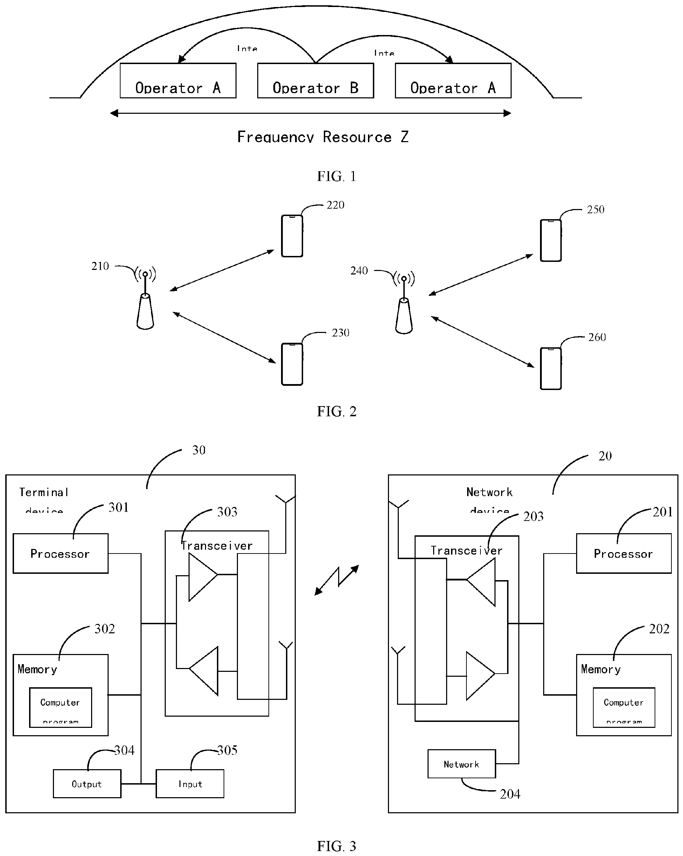

Figure 1 illustrates a schematic diagram of inter-operator broadband communication in the related art. As shown in Figure 1, when contiguous frequency resources Z are jointly occupied by different Operators A and B, and the frequency band resources of Operator A are distributed on both sides of the frequency band resources of another Operator B, a terminal device communicating on the network of Operator A having non-contiguous frequency resource distribution will use a broadband filter comprising the contiguous frequency resources Z to filter received signals. Since transmission signals from the frequency of Operator B exist within the filter bandwidth, such interfering signals may cause intermodulation interference or power leakage into the frequency resources of Operator A due to non-linear operations in signal reception and processing, resulting in the filtered useful signal on Operator A containing interference from signals transmitted by Operator B or terminal devices communicating on the network of Operator B. When the power of signals transmitted by Operator B or its terminal devices is large, this interference causes a significant degradation in the demodulation performance of the terminal device communicating on the network of Operator A.

It should be understood that intermodulation interference, abbreviated as intermodulation, is interference formed when a useful signal and an interfering signal act together on a mixer through the non-linear action of the mixer. When a modulated strong interfering signal and a useful signal (modulated wave or carrier) simultaneously act on the mixer, the modulation signal of the interference is transferred to the carrier frequency of the useful signal through a non-linear action, and then mixed with a local oscillator to obtain an intermediate frequency signal, thereby forming interference. Intermodulation interference is caused by third-order or higher-order terms in the transfer function of a non-linear device, causing other modulation frequencies to enter an interfered frequency. Spectral signal power leakage refers to the phenomenon where signals from Operator B appear in unauthorized frequency bands or regions (signals of Operator A).

For example, as shown in Figure 1, a frequency A on a first resource of two Operators A and a frequency B on an Operator B may produce the following intermodulation signals: 1st order: A, B; 2nd order: (A+B), (A-B); 3rd order: (2A+B), (2B+A); 4th order: (3A+B), (3B+A), (2A+2B); 5th order: (4A+B), (4B+A), (3A+2B), (3B+2A).

In summary, when contiguous frequency resources are jointly occupied by different Operators A and B, and a terminal device in the network of Operator A uses a broadband filter comprising the contiguous frequency resources Z to filter received signals, the received signal of the terminal device is subject to interference from the frequency resources of Operator B. When the power of signals transmitted by Operator B is large, the demodulation performance of the terminal device in Operator A is degraded. Therefore, how to eliminate interference from signals on the frequency resources of Operator B on the received signal of the terminal device in Operator A is a problem that needs to be solved.

In view of the above, the present application provides a method for interference cancellation. The method comprises: a network device indicating a terminal device to report and measure interference from a different operator; the network device adjusting allocation positions of frequency resources of the terminal device based on a measurement report from the terminal device. For example, when the interference from the different operator is large, resources are allocated in one first resource of the terminal device, and the terminal device is indicated to receive signals using a narrowband filter, thereby avoiding strong interference; or resources are allocated on both sides of the terminal device, and the terminal device is indicated to receive signals using narrowband filters on both sides, respectively, thereby avoiding strong interference. When the interference from the different operator is small, resources are allocated in two frequency bands of the terminal device, and the terminal device is indicated to receive signals using a broadband filter, thereby improving the signal reception rate while avoiding interference from the different operator.

To facilitate understanding of the embodiments of the present application, a communication system applicable to the embodiments of the present application will first be described in conjunction with Figure 2.

Figure 2 illustrates a schematic diagram of an example communication system provided by an embodiment of the present application. As shown in Figure 2, the communication system comprises a plurality of communication devices, such as a network device 210, terminal devices 220 and 230, and a network device 240, terminal devices 250 and 260. The network device 210 and the network device 240 belong to different operators. The network device 210 provides services for terminal devices (terminal devices 220 and 230) within its operator in a specific area. The network device 240 provides services for terminal devices (terminal devices 250 and 260) within its operator in a specific area.

The network device 210 may perform data communication with at least one of the terminal device 220 and the terminal device 230. For example, the network device 210 may send first indication information and second indication information to the terminal device 220 or the terminal device 230 by the interference cancellation method provided in the present application. The terminal device 220 or the terminal device 230 may also report interference measurement results to the network device 210 by the interference cancellation method provided in the present application. The network device 240 may perform data communication with at least one of the terminal device 250 and the terminal device 260. For example, the network device 240 may send first indication information and second indication information to the terminal device 250 or the terminal device 260 by the interference cancellation method provided in the present application. The terminal device 250 or the terminal device 260 may also report interference measurement results to the network device 240 by the interference cancellation method provided in the present application.

It should be understood that the communication system shown in Figure 2 may also include more network nodes, such as terminal devices or network devices. The network devices or terminal devices included in the communication system shown in Figure 2 may be any of the various forms of network devices or terminal devices described above. The embodiments of the present application will not illustrate them one by one in the drawings.

In some embodiments, a network device and a terminal device may also be referred to as communication apparatuses, which may be a general-purpose device or a dedicated device. The embodiments of the present application impose no specific limitation in this regard.

As shown in Figure 3, a structural schematic diagram of a network device 20 and a terminal device 30 provided by an embodiment of the present application is illustrated.

The terminal device 30 comprises at least one processor (exemplified in Figure 3 as including one processor 301) and at least one transceiver (exemplified in Figure 3 as including one transceiver 303). Furthermore, the terminal device 30 may also comprise at least one memory (exemplified in Figure 3 as including one memory 302), at least one output device (exemplified in Figure 3 as including one output device 304), and at least one input device (exemplified in Figure 3 as including one input device 305).

The processor 301, the memory 302, and the transceiver 303 are connected via a communication line. The communication line may include a pathway for transferring information among the above components.

The processor 301 may be a general-purpose Central Processing Unit (CPU), a microprocessor, an Application-Specific Integrated Circuit (ASIC), or one or more integrated circuits for controlling the execution of the program of the technical solution of the present application. In a specific implementation, as one embodiment, the processor 301 may also comprise multiple CPUs, and the processor 301 may be a single-CPU processor or a multi-CPU processor. The processor herein may refer to one or more devices, circuits, or processing cores for processing data (e.g., computer program instructions).

The memory 302 may be a device having a storage function. For example, it may be a Read-Only Memory (ROM) or another type of static storage device capable of storing static information and instructions, a Random Access Memory (RAM) or another type of dynamic storage device capable of storing information and instructions, an Electrically Erasable Programmable Read-Only Memory (EEPROM), a Compact Disc Read-Only Memory (CD-ROM) or another optical disc storage, optical disc storage (including compressed discs, laser discs, optical discs, digital versatile discs, Blu-ray discs, etc.), a magnetic disk storage medium or another magnetic storage device, or any other medium capable of carrying or storing desired program code in the form of instructions or data structures and being accessible by a computer. The memory 302 may exist independently and be connected to the processor 301 via a communication line. The memory 302 may also be integrated with the processor 301.

The memory 302 is configured to store computer-executable instructions for executing the technical solution of the present application, and the processor 301 controls the execution. Specifically, the processor 301 is configured to execute the computer-executable instructions stored in the memory 302, thereby implementing the method described in the embodiments of the present application.

Alternatively, in the present application, the processor 301 may also execute the processing-related functions in the signal sending and receiving method provided in the present application, and the transceiver 303 is responsible for communicating with other devices or communication networks. The present application imposes no limitation in this regard.

The computer-executable instructions involved in the present application may also be referred to as application code or computer program code. The present application imposes no limitation in this regard.

The transceiver 303 may use any transceiver-like device for communicating with other devices or communication networks, such as an Ethernet, a Radio Access Network (RAN), or a Wireless Local Area Network (WLAN). The transceiver 303 comprises a transmitter (Tx) and a receiver (Rx).

The output device 304 is in communication with the processor 301 and may display information in various manners. For example, the output device 304 may be a Liquid Crystal Display (LCD), a Light Emitting Diode (LED) display device, a Cathode Ray Tube (CRT) display device, or a projector.

The input device 305 is in communication with the processor 301 and may accept user input in various manners. For example, the input device 305 may be a mouse, a keyboard, a touchscreen device, or a sensing device.

The network device 20 comprises at least one processor (exemplified in Figure 3 as including one processor 201) and at least one transceiver (exemplified in Figure 3 as including one transceiver 203). Furthermore, the network device 20 may also comprise at least one memory (exemplified in Figure 3 as including one memory 202) and at least one network interface (exemplified in Figure 3 as including one network interface 204). The processor 201, the memory 202, the transceiver 203, and the network interface 204 are connected via a communication line. The network interface 204 is used for connecting to a core network device via a link, or connecting to network interfaces of other network devices via wired or wireless links (not shown in Figure 3). The present application imposes no limitation in this regard. The relevant descriptions of the processor 201, the memory 202, and the transceiver 203 may refer to the descriptions of the processor 301, the memory 302, and the transceiver 303 in the terminal device 30, and will not be repeated herein.

It should be understood that the structure shown in Figure 3 does not constitute a specific limitation on the terminal device 30 and the network device 20. For example, in other embodiments of the present application, the terminal device 30 and the network device 20 may comprise more or fewer components than shown in the figure, or may combine certain components, or split certain components, or have different component arrangements. The components shown may be implemented in hardware, software, or a combination of software and hardware.

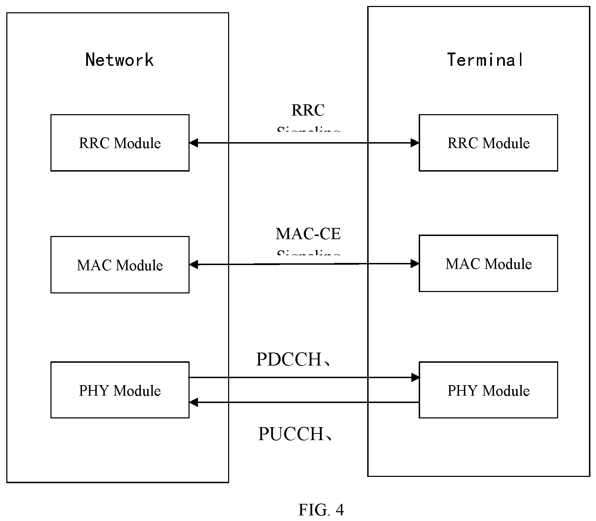

Furthermore, Figure 4 illustrates a communication protocol stack structure of a network device 20 and a terminal device 30 provided by an embodiment of the present application. Referring to Figure 4, the network device 20 and the terminal device 30 may comprise a Radio Resource Control (RRC) module, a Media Access Control (MAC) module, and a Physical (PHY) module.

The RRC module is configured to receive and send RRC signaling. The MAC module is configured to receive and send Media Access Control-Control Element (MAC-CE) signaling. The PHY module is configured to receive and send uplink and downlink control signaling, such as a Physical Downlink Control Channel (PDCCH) and a Physical Uplink Control Channel (PUCCH). It is also configured to receive and send uplink and downlink data, such as a Physical Downlink Shared Channel (PDSCH) and a Physical Uplink Shared Channel (PUSCH).

The interference cancellation method provided by the embodiments of the present application will be described below in conjunction with the drawings, using the interaction between the network device 20 shown in Figure 3 and any terminal device 30 as an example.

It should be noted that the names of messages (or information) or the names of parameters in messages (or information) in the following embodiments are merely examples. In specific implementations, other names may also be used. The present application imposes no limitation in this regard.

It should be understood that, in the embodiments of the present application, the terminal device and/or the network device may perform some or all of the steps in the embodiments of the present application. These steps are merely examples. The present application may also perform other steps or variations of various steps. Furthermore, the various steps may be performed in a different order from that presented in the embodiments of the present application, and it may not be necessary to perform all the steps in the embodiments of the present application. By way of example and not limitation, the execution entities of the various steps in the method 500 may also be a chip applied to a terminal device and a chip applied to a network device.

In the various embodiments of the present application, unless otherwise specified and unless there is a logical conflict, terms and/or descriptions between different embodiments have consistency and may be cross-referenced. Technical features in different embodiments may be combined to form new embodiments based on their inherent logical relationships.

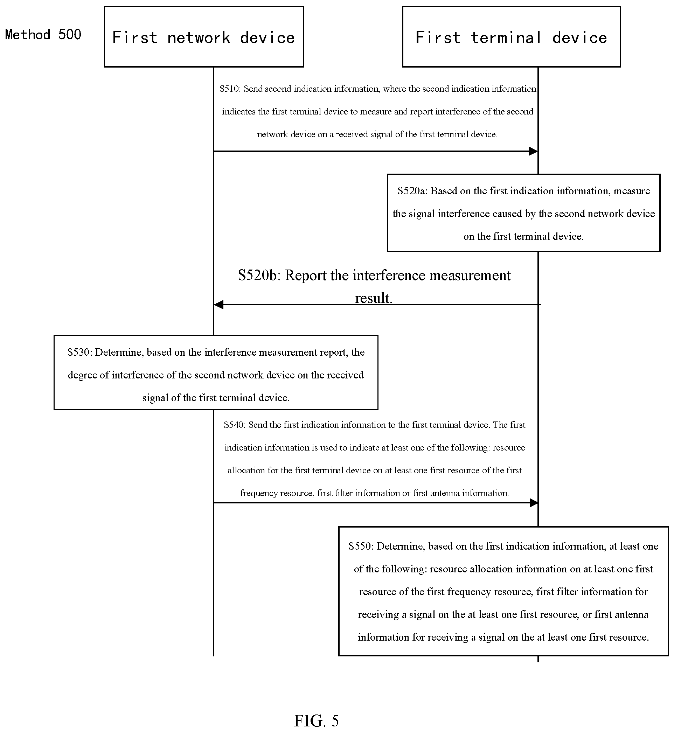

Figure 5 illustrates a schematic interaction diagram of an example interference cancellation method 500 provided by an embodiment of the present application. The method may be applied in the scenario shown in Figure 1 or Figure 2 above, or may be applied in other communication scenarios. The embodiments of the present application impose no limitation in this regard.

As shown in Figure 5, the method 500 illustrated in Figure 5 may comprise S510 to S550. The various steps in the method 500 will be described in detail below in conjunction with Figure 5.

S510: The first network device sends second indication information to the first terminal device. The second indication information indicates the first terminal device to measure and report interference of the second network device on a received signal of the first terminal device.

In the embodiments of the present application, in order to obtain the degree of interference from a different operator to the first terminal device, the first network device may send second indication information to the first terminal device. The second indication information indicates the first terminal device to measure and report interference of the second network device on the received signal of the first terminal device.

It should be understood that the first network device and the second network device belong to a first operator and a second operator, respectively. The first network device provides communication services for the first terminal device in a specific area. The second network device provides communication services for the second terminal device in a specific area. The first frequency resource comprises frequency resources occupied by the first operator and frequency resources occupied by the second operator, and the frequency resources occupied by the first operator on the first frequency resource are non-contiguous.

In one possible implementation, the first frequency resource may further include frequency resources occupied by other operators. That is, operators accessing the non-contiguous frequency resources occupied by the first operator on the first frequency resource may further include a third operator and/or a fourth operator. The embodiments of the present application impose no specific limitation in this regard.

In some embodiments, the second indication information for indicating the first terminal device to measure and report interference from the second network device to the received signal of the first terminal device may further include indicating the first terminal device to measure and report interference from the second terminal device communicating on the second network device to the received signal of the first terminal device, or interference from other network devices and terminal devices communicating on other networks to the received signal of the first terminal device. The embodiments of the present application impose no specific limitation on the source of interference to the received signal of the first terminal device.

In some possible implementations, the second indication information from the first network device to the first terminal device may include a measurement object of the interference signal and a measurement position of the interference signal, that is, a temporal and/or frequency domain position occupied by the interference signal.

For example, taking Figure 1 as an example, the first network device may indicate the first terminal device to measure, on Operator B, interference from Operator B to the received signal of the first terminal device communicating on Operator A, such as measuring the signal transmission power of Operator B. The first network device may also indicate the first terminal device to measure, on Operator A, interference from Operator B to the received signal of the first terminal device communicating on Operator A, such as measuring the signal leakage power from Operator B on Operator A. The embodiments of the present application impose no limitation on the measurement object and measurement position of the interference signal.

In another possible implementation, the second indication information from the first network device to the first terminal device may further include: a reporting format for the first terminal device to report interference from the second network device to the received signal of the first terminal device, and time-frequency resources occupied for the reporting.

It should be noted that the second indication information from the first network device to the first terminal device may be configured by higher-layer or physical layer signaling. Higher-layer signaling may include RRC, MAC-CE, RLC signaling, etc. Physical layer signaling may include DCI, signaling transmitted via a downlink physical channel, etc. The downlink physical channel may be, for example, a PDCCH or a PDSCH.

It should further be noted that the second indication information may be sent by the first network device through existing signaling, or may be sent through newly added signaling. The embodiments of the present application impose no limitation in this regard.

S520a: The first terminal device measures interference caused by the second network device on the first terminal device based on the second indication information.

S520b: The first terminal device reports interference measurement results to the first network device.

In steps S520a and S520b, after receiving the second indication information from the first network device, the first terminal device receives interference signals at positions indicated by the first network device and measures the interference based on the second indication information. The interference may be characterized by relevant parameters, such as Reference Signal Received Power (RSRP), Reference Signal Received Quality (RSRQ), or Received Signal Strength Indication (RSSI), or other power metrics. The embodiments of the present application impose no limitation in this regard.

RSRP is defined as the linear average of the power contributions of resource elements carrying cell-specific reference signals within the measurement bandwidth under consideration. RSRQ refers to the signal-to-noise ratio and interference level of the current channel quality.

S530: The first network device determines the degree of interference of the second network device on the received signal of the first terminal device based on the interference measurement results.

In the embodiments of the present application, after receiving the interference measurement results reported by the first terminal device, the first network device may determine the degree of interference from the different operator or terminal devices communicating on the different operator to the received signal of the first terminal device based on the interference measurement results.

In some possible implementations, when an index of the interference signal, such as at least one of RSRP, RSRQ, or RSSI, is greater than or greater than or equal to a first threshold, it indicates that the degree of interference from the second network device to the first terminal device is large.

In other possible implementations, when a power metric of the interference signal, such as at least one of RSRP, RSRQ, or RSSI, is less than the first threshold, it indicates that the degree of interference from the second network device to the first terminal device is small.

It should be noted that the first threshold may be predefined by the first network device, or may be predefined by a protocol. The embodiments of the present application impose no limitation on the definition method or value range of the first threshold.

S540: The first network device sends first indication information to the first terminal device. The first indication information indicates at least one of: resource allocation for the first terminal device on at least one first resource of a first frequency resource, first filter information, or first antenna information.

It should be noted that the first terminal device occupies a plurality of first resources on the first frequency resource, and any two first resources are non-contiguous.

It should further be noted that resources within a first resource may be contiguous resources or non-contiguous resources. The embodiments of the present application impose no limitation in this regard.

In the embodiments of the present application, after determining the degree of interference from the second network device to the received signal of the first terminal device based on the interference measurement results reported by the first terminal device, the first network device may adjust resource allocation for the first terminal device on at least one first resource of the first frequency resource, and indicate first filter information for the first terminal device to use when receiving signals on the at least one first resource, and indicate first antenna information for the first terminal device when receiving signals on the first resource, so as to avoid interference from the second network device to the received signal of the first terminal device.

In some embodiments, the first filter information comprises one or more filter bandwidths, and the one or more filter bandwidths comprise a frequency resource size of at least one first resource or a frequency resource size of allocated resources on at least one first resource.

Specifically, the first filter information may be used to indicate the first terminal device to receive signals using one filter bandwidth, or to indicate the first terminal device to receive signals using a plurality of filter bandwidths, respectively. The one filter bandwidth may be a frequency resource size of one first resource. The one filter bandwidth may also be a frequency resource size of a plurality of first resources. Alternatively, the one filter bandwidth may be a frequency resource size of allocated resources on one first resource, or the one filter bandwidth may also be a frequency resource size of allocated resources on a plurality of first resources.

In one possible implementation, a first association relationship exists between the one or more filter bandwidths and the frequency resource size of the first resource or the frequency resource size of allocated resources on the first resource.

The first association relationship indicates that, when a filter corresponding to a filter bandwidth allocated by the first network device to the first terminal device is used on a corresponding first resource, a frequency center of the filter is aligned with a frequency center of the first resource; or the first association relationship indicates that, when a filter corresponding to a filter bandwidth allocated by the first network device to the first terminal device is used on allocated resources of the corresponding first resource, a frequency center of the filter is aligned with a frequency center of the allocated resources of the first resource.

It should be understood that when the filter bandwidth comprises two first resources, the filter center is aligned with the center of the frequency resources comprising the two first resources; or when the filter bandwidth comprises two first resources, the filter center is aligned with the frequency center of the allocated resources comprising the two first resources; when the filter bandwidth comprises a plurality of first resources, the filter center is aligned with the center of the frequency resources comprising the plurality of first resources; or when the filter bandwidth comprises a plurality of first resources, the filter center is aligned with the frequency center of the allocated resources comprising the plurality of first resources.

In one possible implementation, when interference from the interference signal to the received signal of the first terminal device is large, the first filter information may comprise one filter bandwidth, and the filter bandwidth is a frequency resource size of one first resource or a frequency resource size of allocated resources on one first resource. Alternatively, when interference from the interference signal to the received signal of the first terminal device is large, the first filter information may comprise a plurality of filter bandwidths. A first association relationship between one filter bandwidth and the frequency resource size of the first resource is: each first filter bandwidth is a frequency resource size of one first resource or a frequency resource size of allocated resources on one first resource. That is, when the first terminal device receives signals using one or more narrowband filters, interference from the interference signal to the received signal can be avoided.

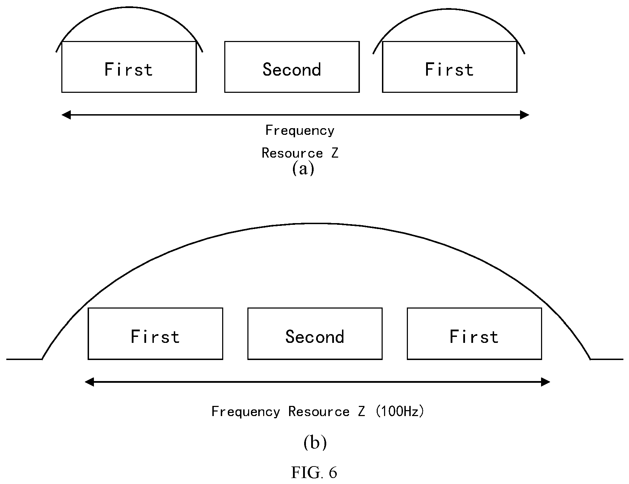

For example, Figure 6 illustrates a schematic diagram of an example interference measurement and resource utilization provided by an embodiment of the present application. As shown in Figure 6(a), it is assumed that the frequency band width of the first frequency resource Z is 100 Hz. The 100 Hz frequency band width is jointly occupied by the first operator and the second operator. The first operator occupies two non-contiguous first resources on the first frequency resource. For example, the frequency resources of the first operator occupy 0-30 Hz and 70-100 Hz, and the second operator occupies 30-70 Hz. When the first network device determines that the degree of interference from the second network device to the received signal of the first terminal device is large, the first network device may allocate resources within one of the two first resources to the first terminal device. The filter bandwidth indicated by the first network device to the first terminal device may be one, and the one filter bandwidth is a frequency resource size of one first resource, or the one filter bandwidth is a frequency resource size of allocated resources on one first resource.

Specifically, the first network device allocates resources to the first terminal device within a frequency band of 0-30 Hz occupied by the first operator, or the first network device allocates resources to the first terminal device within a frequency band of 70-100 Hz occupied by the first operator, and the first network device indicates the first terminal device to receive signals using a narrowband filter within the frequency band of 0-30 Hz or the frequency band of 70-100 Hz.

It should be noted that the above frequency bands are provided by way of example and do not constitute a limitation on the solution. The first terminal device may also occupy other frequency bands on the first operator, and the frequency bands occupied by the first terminal device on the first operator may be the same or different.

It should be noted that in this manner, the first terminal device receives signals using a narrowband filter, and therefore the interfering signal can be filtered out, thereby avoiding strong interference from other different operators on the received signal of the first terminal device.

Alternatively, when the first operator occupies two non-contiguous first resources on the first frequency resource and the first network device determines that the degree of interference from the second network device to the received signal of the first terminal device is large, the first network device may also allocate resources to the first terminal device on each of the two first resources, respectively. The filter bandwidth indicated by the first network device to the first terminal device may be two, each filter bandwidth being a frequency resource size of one first resource, or each filter bandwidth being a frequency resource size of allocated resources on one first resource. Alternatively, the first network device may indicate one filter bandwidth to the first terminal device, and it is predefined that the first terminal device may use two filters having a bandwidth equal to the indicated bandwidth to receive signals on the two first resources, respectively.

Specifically, the first network device allocates resources to the first terminal device in the frequency bands of 0-30 Hz and 70-100 Hz occupied by the first operator, respectively, and the first network device indicates the first terminal device to receive signals using two narrowband filters in the frequency band of 0-30 Hz and the frequency band of 70-100 Hz, respectively.

It should be noted that in this manner, since the first network device allocates resources to the first terminal device in each of the two frequency bands, respectively, the first filter information includes two filter bandwidths, and the first terminal device receives signals in different frequency bands using two filter bandwidths, respectively. Since both frequency bands receive signals using narrowband filters, the interfering signal from the second network device can be filtered out, thereby avoiding strong interference from the second network device on the received signal of the first terminal device.

In other embodiments, when interference from the interference signal to the received signal of the first terminal device is small, the first filter information may include one filter bandwidth, and the filter bandwidth is a frequency resource size of a plurality of first resources or a frequency resource size of allocated resources on a plurality of first resources.

For example, as shown in Figure 6(b), when the first operator occupies two non-contiguous first resources on the first frequency resource and the degree of interference from the second network device to the received signal of the first terminal device is small, the first network device may allocate resources to the first terminal device in each of the two first resources, and the first filter information indicated to the first terminal device includes one filter bandwidth, and the filter bandwidth includes a frequency resource size of a plurality of first resources.

Specifically, the first network device allocates resources to the first terminal device in the frequency bands of 0-30 Hz and 70-100 Hz occupied by the first operator, respectively, and the first network device indicates the first terminal device to receive signals using a broadband filter in the frequency band of 0-100 Hz. In this implementation, the first terminal device fully improves the transmission rate by using a large bandwidth.

It should be understood that in the example of Figure 6, first operator 1 and first operator 2 are the same operator.

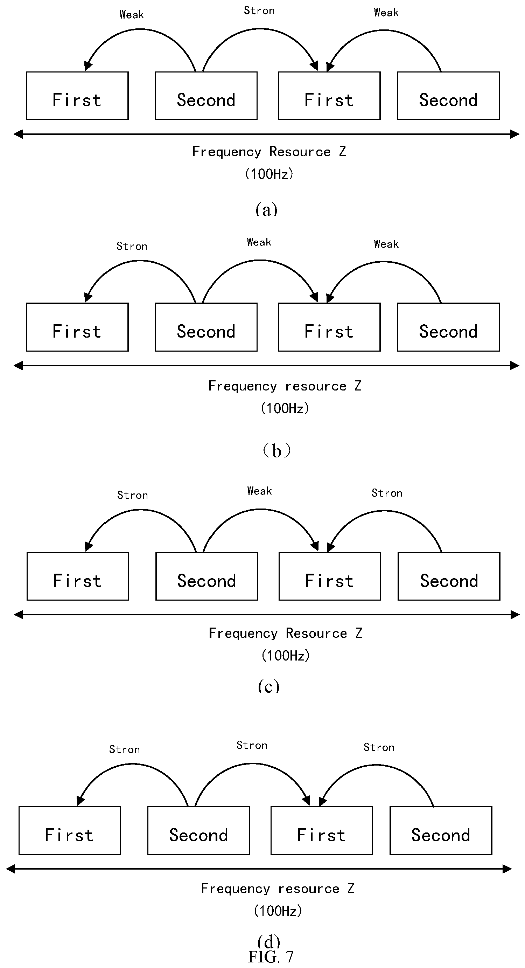

For another example, Figure 7 illustrates a schematic diagram of another example interference measurement and resource utilization provided by an embodiment of the present application. As shown in Figure 7(a), the first frequency resource includes four resources, wherein the interference between first operator 1 and second operator 1 is weak, the interference between second operator 1 and first operator 2 is strong, and the interference between first operator 2 and second operator 2 is weak. Then the first network device may indicate two filter bandwidths to the first terminal device, the two filter bandwidths being the sum of the frequency resource sizes occupied by first operator 1 and second operator 1, and the sum of the frequency resource sizes occupied by first operator 2 and second operator 2, respectively. Alternatively, the first network device may indicate one filter bandwidth to the first terminal device, and it is predefined that the first bandwidth may receive signals on two frequency bands, that is, the first network device indicates a bandwidth that is the sum of the frequency resource sizes occupied by first operator 1 and second operator 1, and it is predefined that the bandwidth may also receive signals on first operator 2 and second operator 2.

As shown in Figure 7(b), the first frequency resource includes four resources, wherein the interference between first operator 1 and second operator 1 is strong, the interference between second operator 1 and first operator 2 is weak, and the interference between first operator 2 and second operator 2 is weak. Then the first network device may indicate two filter bandwidths to the first terminal device, the two filter bandwidths being the frequency resource size occupied by first operator 1, and the sum of the frequency resource sizes occupied by second operator 1, first operator 2, and second operator 2, respectively.

As shown in Figure 7(c), the first frequency resource includes four resources, wherein the interference between first operator 1 and second operator 1 is strong, the interference between second operator 1 and first operator 2 is weak, and the interference between first operator 2 and second operator 2 is strong. Then the first network device may indicate three filter bandwidths to the first terminal device, the three filter bandwidths being the frequency resource size occupied by first operator 1, the sum of the frequency resource sizes occupied by second operator 1 and first operator 2, and the frequency resource size occupied by second operator 2, respectively.

As shown in Figure 7(d), the first frequency resource includes four resources, wherein the interference between first operator 1 and second operator 1 is strong, the interference between second operator 1 and first operator 2 is strong, and the interference between first operator 2 and second operator 2 is strong. Then the first network device may indicate four filter bandwidths to the first terminal device, the four filter bandwidths each being the frequency resource size occupied by first operator 1. Alternatively, the first network device may indicate one filter bandwidth to the first terminal device, and it is predefined that the one filter bandwidth may receive signals on other frequency bands.

It should be understood that in the example of Figure 7, first operator 1 and first operator 2 are the same operator. Second operator 1 and second operator 2 may be different operators. For example, second operator 1 may also be a third operator, and second operator 2 may also be a fourth operator. The embodiments of the present application impose no specific limitation in this regard.

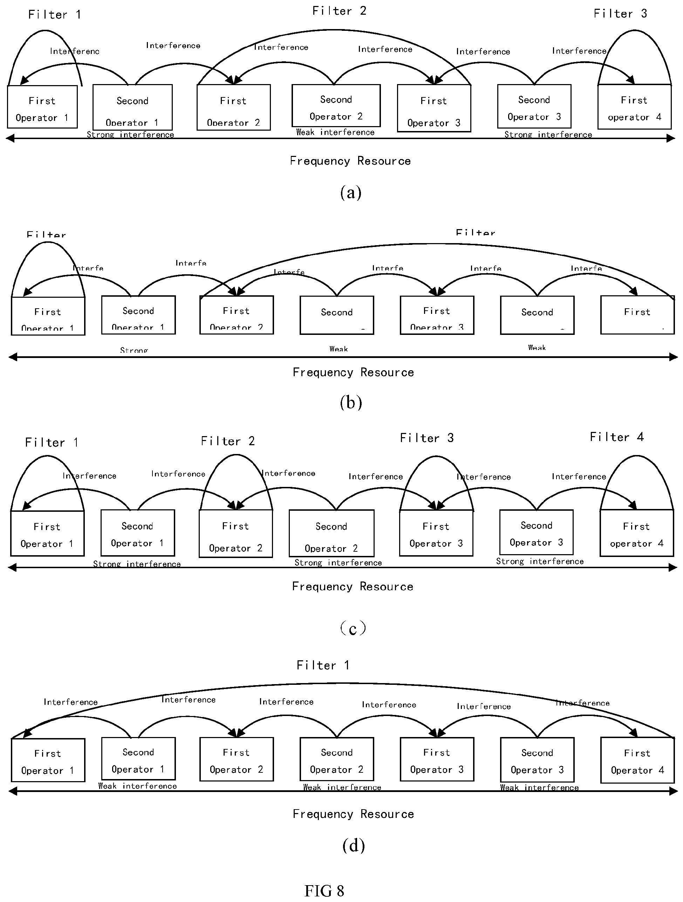

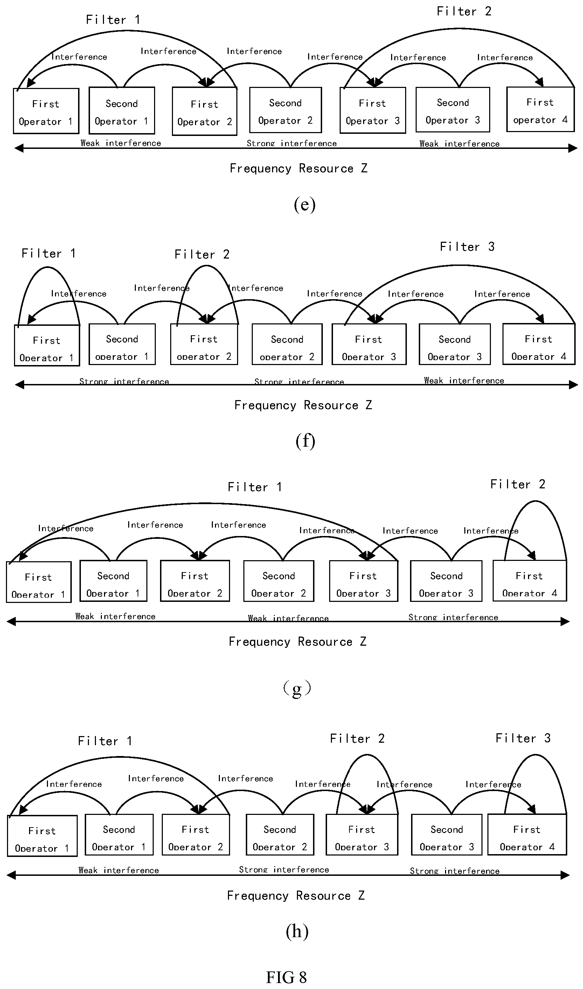

For another example, Figure 8 illustrates a schematic diagram of yet another example interference measurement and resource utilization provided by an embodiment of the present application. As shown in Figure 8(a), when second operator 1 causes strong interference to at least one of first operator 1 and first operator 2, or the signal transmission power of second operator 1 is large, first resource 1 of first operator 1 and first resource 2 of first operator 2 use filter 1 and filter 2 to receive signals, respectively. When second operator 2 causes weak interference to first operator 2 and first operator 3, first resource 2 of first operator 2 and first resource 3 of first operator 3 may use the same filter to receive signals. Therefore, first resource 2 of first operator 2 and first resource 3 of first operator 3 use filter 2 to receive signals. When second operator 3 causes strong interference to at least one of first operator 3 and first operator 4, or the signal transmission power of second operator 3 is large, first resource 3 of first operator 3 and first resource 4 of first operator 4 use different filters to receive signals, respectively. That is, when first resource 3 of first operator 3 and first resource 2 of first operator 2 use filter 2 to receive signals, first operator 4 uses filter 3 to receive signals.

Furthermore, the first network device indicates the first terminal device to receive signals on first resource 1 of first operator 1 using a first bandwidth (frequency resource size of the first resource), to receive signals on first resource 2 of first operator 2 and first resource 3 of first operator 3 using a second bandwidth (sum of the frequency resource sizes occupied by first operator 2, second operator 2, and first operator 3), and to receive signals on first resource 4 of first operator 4 using the first bandwidth (frequency resource size of the first resource). Alternatively, the first network device indicates the first terminal device to receive signals on first resource 1 of first operator 1 and first resource 4 of first operator 4 using the first bandwidth (frequency resource size of the first resource), and to receive signals on first resource 2 of first operator 2 and first resource 3 of first operator 3 using the second bandwidth.

As shown in Figure 8(b), when second operator 1 causes strong interference to at least one of first operator 1 and first operator 2, or the signal transmission power of second operator 1 is large, first resource 1 of first operator 1 and first resource 2 of first operator 2 use filter 1 and filter 2 to receive signals, respectively. When second operator 2 causes weak interference to first operator 2 and first operator 3, first resource 2 of first operator 2 and first resource 3 of first operator 3 may use the same filter to receive signals. When second operator 3 causes weak interference to first operator 3 and first operator 4, first resource 3 of first operator 3 and first resource 4 of first operator 4 may use the same filter to receive signals. Therefore, first resource 2 of first operator 2, first resource 3 of first operator 3, and first resource 4 of first operator 4 may use filter 2 to receive signals.

Furthermore, the first network device indicates the first terminal device to receive signals on first resource 1 of first operator 1 using a first bandwidth (frequency resource size of the first resource), and to receive signals on first resource 2 of first operator 2, first resource 3 of first operator 3, and first resource 4 of first operator 4 using a third bandwidth (sum of the frequency resource sizes occupied by first operator 1, second operator 1, first operator 2, second operator 2, first operator 3, second operator 3, and first operator 4).

As shown in Figure 8(c), when second operator 1 causes strong interference to at least one of first operator 1 and first operator 2, or the signal transmission power of second operator 1 is large, first resource 1 of first operator 1 and first resource 2 of first operator 2 use filter 1 and filter 2 to receive signals, respectively. When second operator 2 causes strong interference to at least one of first operator 2 and first operator 3, or the signal transmission power of second operator 2 is large, first resource 2 of first operator 2 and first resource 3 of first operator 3 use filter 2 and filter 3 to receive signals, respectively. When second operator 3 causes strong interference to at least one of first operator 3 and first operator 4, or the signal transmission power of second operator 3 is large, first resource 3 of first operator 3 and first resource 4 of first operator 4 use filter 3 and filter 4 to receive signals, respectively.

Furthermore, the first network device indicates the first terminal device to receive signals on first resource 1 of first operator 1 using a first bandwidth (frequency resource size of the first resource), to receive signals on first resource 2 of first operator 2 using a first bandwidth (frequency resource size of the first resource), to receive signals on first resource 3 of first operator 3 using a first bandwidth (frequency resource size of the first resource), and to receive signals on first resource 4 of first operator 4 using a first bandwidth (frequency resource size of the first resource). Alternatively, the first network device indicates the first terminal device to receive signals on first resource 1 of first operator 1, first resource 2 of first operator 2, first resource 3 of first operator 3, and first resource 4 of first operator 4 using the first bandwidth (frequency resource size of the first resource), respectively.

As shown in Figure 8(d), when second operator 1 causes weak interference to first operator 1 and first operator 2, first resource 1 of first operator 1 and first resource 2 of first operator 2 may use the same filter 1 to receive signals. When second operator 2 causes weak interference to first operator 2 and first operator 3, first resource 2 of first operator 2 and first resource 3 of first operator 3 may use the same filter to receive signals. When second operator 3 causes weak interference to first operator 3 and first operator 4, first resource 3 of first operator 3 and first resource 4 of first operator 4 may use the same filter to receive signals. Then, first resource 1 of first operator 1, first resource 2 of first operator 2, first resource 3 of first operator 3, and first resource 4 of first operator 4 may use the same filter 1 to receive signals.

Furthermore, the first network device indicates the first terminal device to receive signals on first resource 1 of first operator 1, first resource 2 of first operator 2, first resource 3 of first operator 3, and first resource 4 of first operator 4 using a fourth bandwidth (sum of the frequency resource sizes occupied by first operator 1, second operator 1, first operator 2, second operator 2, first operator 3, second operator 3, and first operator 4).

As shown in Figure 8(e), when second operator 1 causes weak interference to first operator 1 and first operator 2, first resource 1 of first operator 1 and first resource 2 of first operator 2 may use the same filter 1 to receive signals. When second operator 2 causes strong interference to at least one of first operator 2 and first operator 3, or the signal transmission power of second operator 2 is large, first resource 2 of first operator 2 and first resource 3 of first operator 3 use filter 1 and filter 2 to receive signals, respectively. When second operator 3 causes weak interference to first operator 3 and first operator 4, first resource 3 of first operator 3 and first resource 4 of first operator 4 may use the same filter 2 to receive signals.

Furthermore, the first network device indicates the first terminal device to receive signals on first resource 1 of first operator 1 and first resource 2 of first operator 2 using a fifth bandwidth (sum of the frequency resource sizes occupied by first operator 1, second operator 1, and first operator 2), and to receive signals on first resource 3 of first operator 3 and first resource 4 of first operator 4 using a sixth bandwidth (sum of the frequency resource sizes occupied by first operator 3, second operator 3, and first operator 4).

As shown in Figure 8(f), when second operator 1 causes strong interference to at least one of first operator 1 and first operator 2, or the signal transmission power of second operator 1 is large, first resource 1 of first operator 1 and first resource 2 of first operator 2 use filter 1 and filter 2 to receive signals, respectively. When second operator 2 causes strong interference to at least one of first operator 2 and first operator 3, or the signal transmission power of second operator 2 is large, first resource 2 of first operator 2 and first resource 3 of first operator 3 use filter 2 and filter 3 to receive signals, respectively. When second operator 3 causes weak interference to first operator 3 and first operator 4, first resource 3 of first operator 3 and first resource 4 of first operator 4 may use the same filter 3 to receive signals.

Furthermore, the first network device indicates the first terminal device to receive signals on first resource 1 of first operator 1 and first resource 2 of first operator 2 using a first bandwidth (frequency resource size of the first resource), and to receive signals on first resource 3 of first operator 3 and first resource 4 of first operator 4 using a sixth bandwidth (sum of the frequency resource sizes occupied by first operator 3, second operator 3, and first operator 4). Alternatively, the first network device indicates the first terminal device to receive signals on first resource 1 of first operator 1 and first resource 2 of first operator 2 using the first bandwidth (frequency resource size of the first resource), respectively, and to receive signals on first resource 3 of first operator 3 and first resource 4 of first operator 4 using the sixth bandwidth.

As shown in Figure 8(g), when second operator 1 causes weak interference to first operator 1 and first operator 2, first resource 1 of first operator 1, first resource 2 of first operator 2, and first resource 3 of first operator 3 may use the same filter 1 to receive signals. When second operator 3 causes strong interference to at least one of first operator 3 and first operator 4, or the signal transmission power of second operator 3 is large, first resource 3 of first operator 3 and first resource 4 of first operator 4 use filter 1 and filter 2 to receive signals, respectively.

Furthermore, the first network device indicates the first terminal device to receive signals on first resource 1 of first operator 1, first resource 2 of first operator 2, and first resource 3 of first operator 3 using a seventh bandwidth (sum of the frequency resource sizes occupied by first operator 1, second operator 1, first operator 2, second operator 2, and first operator 3), and to receive signals on first resource 4 of first operator 4 using a first bandwidth (frequency resource size of the first resource).

As shown in Figure 8(h), when second operator 1 causes weak interference to first operator 1 and first operator 2, first resource 1 of first operator 1, first resource 2 of first operator 2, and first resource 3 of first operator 3 may use the same filter 1 to receive signals. When second operator 2 causes strong interference to at least one of first operator 2 and first operator 3, or the signal transmission power of second operator 2 is large, first resource 2 of first operator 2 and first resource 3 of first operator 3 use filter 1 and filter 2 to receive signals, respectively. When second operator 3 causes strong interference to at least one of first operator 3 and first operator 4, or the signal transmission power of second operator 3 is large, first resource 3 of first operator 3 and first resource 4 of first operator 4 use filter 2 and filter 3 to receive signals, respectively.

Furthermore, the first network device indicates the first terminal device to receive signals on first resource 1 of first operator 1 and first resource 2 of first operator 2 using a fifth bandwidth (sum of the frequency resource sizes occupied by first operator 1, second operator 1, and first operator 2), to receive signals on first resource 3 of first operator 3 using a first bandwidth (frequency resource size of the first resource), and to receive signals on first resource 4 of first operator 4 using a first bandwidth (frequency resource size of the first resource). Alternatively, the first network device indicates the first terminal device to receive signals on first resource 3 of first operator 3 and first resource 4 of first operator 4 using the first bandwidth (frequency resource size of the first resource), respectively, and to receive signals on first resource 1 of first operator 1 and first resource 2 of first operator 2 using the fifth bandwidth.

It should be understood that in the example of Figure 8, first operator 1, first operator 2, first operator 3, and first operator 4 are the same operator. Second operator 1, second operator 2, and second operator 3 may be different operators. For example, second operator 2 may also be a third operator, and second operator 3 may also be a fourth operator. The embodiments of the present application impose no specific limitation in this regard.

In summary, when there are N first resources on the first frequency resource (with N-1 interference sources or different operators), the first terminal device may report interference measurement results to the first network device (interference from N-1 interference sources on adjacent first resources). The first network device determines the intensity of N-1 interferences or the degree of interference to N resources based on the interference measurement results. When M of the N-1 interference degrees are strong interferences, the first network device indicates resource allocation on N first resources to the first terminal device based on the positions of the frequency resources occupied by the strong interferences. When two allocated resources have a strong interference between them, different filters need to be used to receive signals for these two allocated resources. When two allocated resources do not have a strong interference between them, the same filter may be used to receive signals for these two allocated resources. If the first network device allocates resources to the first terminal device on all N first resources, then the first network device needs to indicate M+1 filter bandwidths to the first terminal device. When the first terminal device receives signals based on the M+1 filter bandwidths, interference from other network devices to the received signal of the first terminal device can be filtered out.

In the above examples, the first indication information sent by the first network device to the first terminal device may be configured by higher-layer or physical layer signaling. Higher-layer signaling may include RRC, MAC-CE, RLC signaling, etc. Physical layer signaling may include DCI, signaling transmitted via a downlink physical channel, etc. The downlink physical channel may be, for example, a PDCCH or a PDSCH. To reduce signaling overhead, in another embodiment, the resource allocation situation provided by the first network device to the first terminal device may also be predefined by a protocol. The present application imposes no limitation on the manner in which the first terminal device obtains the resource allocation situation.

Based on the above steps S510 to S540, the first network device may indicate the first terminal device to measure and report the degree of interference from the second network device to the first terminal device. The first network device determines the resource allocation situation of the first terminal device based on the degree of interference and indicates the first terminal device to receive signals using a broadband filter or a narrowband filter, thereby avoiding interference from the second network device to the first terminal device when the first terminal device receives signals.

In other embodiments of the present application, the first network device may further indicate multi-antenna related information for the first terminal device to allocate resources in different frequency bands based on the resource allocation situation and the usage of broadband/narrowband filters. That is, the first indication information from the first network device to the first terminal device may further include first antenna information. The first antenna information is applied to at least one first resource or allocated resources of at least one first resource, and this implementation may further improve the signal reception performance of the first terminal device.

In one possible implementation, the first antenna information includes an antenna port, precoding information, a Transmission Configuration Indication (TCI), a Sounding Reference Signal (SRS), and a Demodulation Reference Signal (DMRS) sequence initialization information. Of course, the first antenna related information may also include other related information. The embodiments of the present application impose no limitation in this regard.

It should be noted that the number of the first antenna information includes one or more.

It should be understood that antenna port information indicates the antenna port used for data transmission and the antenna port used by other terminals. In the related art, all resources indicated by one DCI use the same antenna port. Precoding information indicates the precoding matrix used by the network device to send data to the terminal device. TCI indicates which reference signal (e.g., SSB signal and CSI-RS signal) beam is the same as the beam of the downlink data (indicating the downlink beam). In the related art, all resources indicated by one DCI use the same TCI. SRS request indicates a sounding reference signal transmission request. If the UE is indicated to use SRS, the base station may directly obtain uplink channel information by receiving the SRS. In the related art, one DCI indicates one SRS transmission. DMRS sequence initialization information is for selecting two preconfigured DMRS sequence initial values.

In the embodiments of the present application, when the first network device indicates resource allocation on both sides and indicates the use of two narrowband filters to receive signals via DCI, the first network device needs to indicate, via one DCI, the antenna ports used for data transmission on both side resources and the antenna ports used by other terminals, and the first network device needs to indicate, via one DCI, the TCI on both side resources, and the first network device needs to indicate, via one DCI, the SRS transmission and DMRS sequence initialization information on both side resources.

Optionally, a second association relationship exists between the one or more first antenna information and the first resource or the allocated resources on the first resource.

For example, as shown in Figure 6(a), when the first network device indicates to the first terminal device to receive signals using a filter having a bandwidth equal to the frequency resource size of the first resource, the first network device indicates one first antenna information to the first terminal device. Alternatively, when the first network device indicates to the first terminal device to receive signals using two filters each having a bandwidth equal to the frequency resource size of the first resource, the first network device indicates two first antenna information to the first terminal device. As shown in Figure 6(b), when the first network device indicates to the first terminal device to receive signals using a filter having a bandwidth equal to the sum of the frequency resource sizes occupied by first operator 1, second operator 1, and first operator 2, the first network device indicates one first antenna information to the first terminal device.

For another example, as shown in Figure 7(a), when the first network device indicates the first terminal device to receive signals using two filters having bandwidths equal to the sum of the frequency resource sizes occupied by first operator 1 and second operator 1, and the sum of the frequency resource sizes occupied by first operator 2 and second operator 2, respectively, the first network device indicates two first antenna information to the first terminal device. As shown in Figure 7(b), when the first network device indicates the first terminal device to receive signals using one filter having a bandwidth equal to the frequency resource size of the first resource and one filter having a bandwidth equal to the sum of the frequency resource sizes occupied by second operator 1, first operator 2, and second operator 2, the first network device indicates two first antenna information to the first terminal device. As shown in Figure 7(c), when the first network device indicates the first terminal device to receive signals using two filters each having a bandwidth equal to the frequency resource size of the first resource and one filter having a bandwidth equal to the sum of the frequency resource sizes occupied by second operator 1 and first operator 2, the first network device indicates three first antenna information to the first terminal device. As shown in Figure 7(d), when the first network device indicates the first terminal device to receive signals using four filters each having a bandwidth equal to the frequency resource size of the first resource, the first network device indicates four first antenna information to the first terminal device.

For another example, as shown in Figure 8(a), when the first network device indicates the first terminal device to receive signals using two filters each having the first bandwidth and one filter having the second bandwidth, the first network device may indicate three first antenna information to the first terminal device, with the two filters having the first bandwidth and the one filter having the second bandwidth each using one first antenna information. Alternatively, the first network device may also indicate two first antenna information to the first terminal device, with the two filters having the first bandwidth using one first antenna information and the one filter having the second bandwidth using one first antenna information.

As shown in Figure 8(b), when the first network device indicates the first terminal device to receive signals using one filter having the first bandwidth and one filter having the third bandwidth, respectively, the first network device may indicate two first antenna information to the first terminal device, that is, the filter having the first bandwidth and the filter having the third bandwidth each use one first antenna information.

As shown in Figure 8(c), when the first network device indicates the first terminal device to receive signals using four filters each having the first bandwidth, respectively, the first network device may indicate four first antenna information to the first terminal device, that is, the four filters each having the first bandwidth each use one first antenna information. Alternatively, the first network device may also indicate one first antenna information to the first terminal device, that is, the four filters each having the first bandwidth use the same first antenna information.

As shown in Figure 8(d), when the first network device indicates the first terminal device to receive signals using one filter having the fourth bandwidth, the first network device may indicate one first antenna information to the first terminal device.

As shown in Figure 8(e), when the first network device indicates the first terminal device to receive signals using one filter having the fifth bandwidth and one filter having the sixth bandwidth, the first network device may indicate two first antenna information to the first terminal device, that is, the filter having the fifth bandwidth and the filter having the sixth bandwidth each use one first antenna information to receive signals.

As shown in Figure 8(f), when the first network device indicates the first terminal device to receive signals using two filters each having the first bandwidth and one filter having the sixth bandwidth, the first network device may indicate three first antenna information to the first terminal device, that is, the two filters each having the first bandwidth and the one filter having the sixth bandwidth each use one first antenna information to receive signals. Alternatively, the first network device indicates two first antenna information to the first terminal device, that is, the two filters each having the first bandwidth use one first antenna information, and the one filter having the sixth bandwidth uses one first antenna information.

As shown in Figure 8(g), when the first network device indicates the first terminal device to receive signals using one filter having the seventh bandwidth and one filter having the first bandwidth, the first network device may indicate two first antenna information to the first terminal device, that is, the filter having the seventh bandwidth and the filter having the first bandwidth each use one first antenna information to receive signals.

As shown in Figure 8(h), when the first network device indicates the first terminal device to receive signals using one filter having the fifth bandwidth and two filters each having the first bandwidth, the first network device may indicate three first antenna information to the first terminal device, that is, the filter having the fifth bandwidth and the two filters each having the first bandwidth each use one first antenna information to receive signals. Alternatively, the first network device indicates two first antenna information to the first terminal device, that is, the filter having the fifth bandwidth uses one first antenna information, and the two filters each having the first bandwidth use one first antenna information.

Taking the example shown in Figure 6(a), in one possible implementation of the present application, when the first network device allocates resources to the first terminal device within one of the two first resources and indicates the first terminal device to receive signals using a narrowband filter, the first terminal device may use all antennas to receive signals. For example, when the first terminal device includes 12 antennas, with every 3 antennas forming one antenna port, 4 antenna ports may be for receiving signals.

Taking the example shown in Figure 6(b), in another possible implementation of the present application, when the first network device allocates resources to the first terminal device in each of the two first resources, respectively, and indicates the first terminal device to receive signals using two narrowband filters, the first network device indicates to the first terminal device different antenna ports corresponding to the two first resources or the allocated resources on the two first resources, and the sum of the number of antenna ports corresponding to the two first resources or the allocated resources on the two first resources is less than or less than or equal to the maximum number of antenna ports of the first device.

For example, the first terminal device includes 12 antennas, with every 3 antennas forming one antenna port, comprising a total of 4 antenna ports. Then, when receiving signals on the two first resources, respectively, the sum of the number of antenna ports on the two first resources is less than or equal to 4. For example, port 1 is for receiving signals on one first resource, and port 2 is for receiving signals on another first resource; or port 1 is for receiving signals on one first resource, and ports 2 and 3 are for receiving signals on another first resource; or port 1 is for receiving signals on one first resource, and ports 2, 3, and 4 are for receiving signals on another first resource. The embodiments of the present application impose no limitation on the allocation manner of antenna ports.

It should be noted that since the first network device allocates resources to the first terminal device in each of the two first resources, respectively, and indicates the first terminal device to receive signals using two narrowband filters, the maximum number of streams for each signal is limited and cannot reach the maximum number of streams. Therefore, the first network device may indicate, to the first terminal device, the number of antenna ports for receiving signals. It should be understood that the maximum number of streams is equal to the number of antenna ports, and the number of antenna ports is a logical concept. The number of antenna ports is less than or equal to the number of physical antennas, that is, one antenna port may be composed of a plurality of antennas.

Alternatively, when the first network device allocates resources to the first terminal device in each of the two first resources, respectively, and indicates the first terminal device to receive signals using a broadband filter, the first network device may indicate the first terminal device to use all antennas to receive signals, thereby improving the signal transmission efficiency. For example, when the first terminal device includes 12 antennas, with every 3 antennas forming one antenna port, 4 antenna ports may be for receiving signals.

In the above embodiments, the first network device sends the first filter information and the first antenna information to the first terminal device via signaling. To reduce signaling overhead, in other embodiments, the first terminal device may also obtain the first filter information and the first antenna information through predefined protocol. For example, an association relationship between the resource allocation situation and the first filter information and the first antenna information may be predefined, such that when the first terminal device obtains the resource allocation situation, the first filter information and the first antenna information can be obtained. For example, the association relationship may include the following:

Unilateral resource allocation uses a narrowband filter; bilateral resource allocation uses a broadband filter.

Unilateral resource allocation uses a narrowband filter; bilateral resource allocation uses narrowband filters, with antenna ports equally divided and both sides using the same other multi-antenna related information.

Unilateral resource allocation uses a narrowband filter; bilateral resource allocation uses narrowband filters, with antenna ports equally divided and new signaling indicating other multi-antenna related information.

Unilateral resource allocation uses a narrowband filter; bilateral resource allocation uses narrowband filters, with new signaling indicating multi-antenna related information.

Specifically, when the resource allocation situation obtained by the first terminal device is unilateral resource allocation, a narrowband filter is for receiving signals on one first resource. When the resource allocation situation obtained by the first terminal device is bilateral resource allocation, a broadband filter is for receiving signals on two first resources. Alternatively, when the resource allocation situation obtained by the first terminal device is bilateral resource allocation, two narrowband filters are for receiving signals on the two first resources, respectively, with both sides reusing the first antenna information. Alternatively, when the resource allocation situation obtained by the first terminal device is bilateral resource allocation, two narrowband filters are for receiving signals on the two first resources, respectively, with the first network device sending signaling to indicate the first antenna information for the two first resources, respectively.

Alternatively, to reduce signaling overhead, in other embodiments, the first terminal device may also obtain the first filter information and the first antenna information through a predefined table. Each row in the table corresponds to one association relationship, and new signaling uses bits to indicate which predefined relationship is used.

For example, the association relationship may include the following:

Unilateral resource allocation uses a narrowband filter; bilateral resource allocation uses a broadband filter.

Unilateral resource allocation uses a narrowband filter; bilateral resource allocation uses narrowband filters, with both sides using the same multi-antenna related information.

Unilateral resource allocation uses a narrowband filter; bilateral resource allocation uses narrowband filters, with antenna ports equally divided (divided by sequence number, for example, ports 1-2 are assigned to the left side, and ports 3-4 are assigned to the right side), with both sides using the same other multi-antenna related information.

Unilateral resource allocation uses a narrowband filter; bilateral resource allocation uses narrowband filters, with antenna ports equally divided and new signaling indicating other multi-antenna related information.

Unilateral resource allocation uses a narrowband filter; bilateral resource allocation uses narrowband filters, with new signaling indicating multi-antenna related information.

S550: The first terminal device determines at least one of the following based on the first indication information: resource allocation information on at least one first resource of the first frequency resource, the first filter information for receiving signals on the at least one first resource, or the first antenna information for receiving signals on the at least one first resource.

In step S550, the first terminal device may determine resource allocation information on at least one first resource of the first frequency resource and/or the first filter information for receiving signals on the at least one first resource and/or the first antenna information for receiving signals on the at least one first resource based on the first indication information of the first terminal device. Interference from a different operator can thereby be avoided when receiving signals.

Based on the method 500 described above, the first network device may adjust allocation positions of frequency resources for the first terminal device and indicate the first filter information and the first antenna information for the first terminal device to receive signals, such that the first terminal device may obtain resource allocation positions on at least one first resource as well as filter information for receiving signals on the at least one first resource or the first antenna information for receiving signals on the at least one first resource, thereby eliminating interference from a different operator on the received signal of the first terminal device.

It should be understood that the manners, cases, categories, and division of embodiments in the present application are merely for the convenience of description and should not constitute a special limitation. Features in the various manners, categories, cases, and embodiments may be combined to form new embodiments where they are not contradictory.

It should also be understood that the foregoing is merely to assist those skilled in the art in better understanding the embodiments of the present application, and is not intended to limit the scope of the embodiments of the present application. Those skilled in the art can obviously make various equivalent modifications or variations based on the examples given above, such as certain steps in the method 500 described above being unnecessary, or new steps being added. Alternatively, any combination of two or more of the above embodiments. Such modified, varied, or combined solutions also fall within the scope of the embodiments of the present application.

It should also be understood that the above description of the embodiments of the present application focuses on emphasizing the differences between the various embodiments. Unmentioned similarities may be cross-referenced, and will not be repeated here for the sake of brevity.

It should also be understood that the magnitude of the serial numbers of the various processes above does not imply an order of execution. The execution order of the various processes should be determined by their functions and internal logic, and should not constitute any limitation on the implementation process of the embodiments of the present application.

It should also be understood that in the various embodiments of the present application, "pre-set," "predefined" may be implemented by saving corresponding codes, tables, or other means for indicating relevant information in a device (e.g., including a terminal device and a network device). The present application imposes no limitation on the specific implementation manner.

It should also be understood that in the various embodiments of the present application, unless otherwise specified and unless there is a logical conflict, terms and/or descriptions between different embodiments have consistency and may be cross-referenced. Technical features in different embodiments may be combined to form new embodiments based on their inherent logical relationships.

The example method provided by the present application has been described in detail above. It should be understood that the first network device and the first terminal device comprise corresponding hardware structures and/or software modules for performing the respective functions to implement the above functions. Those skilled in the art should readily appreciate that the units and algorithm steps described in connection with the embodiments disclosed herein may be implemented in hardware or a combination of hardware and computer software. Whether a function is performed by hardware or hardware driven by computer software depends on the particular application and design constraints of the technical solution. Professional technicians may use different methods for each specific application to implement the described functions, but such implementation should not be considered as going beyond the scope of the present application.

The communication apparatuses will now be described.

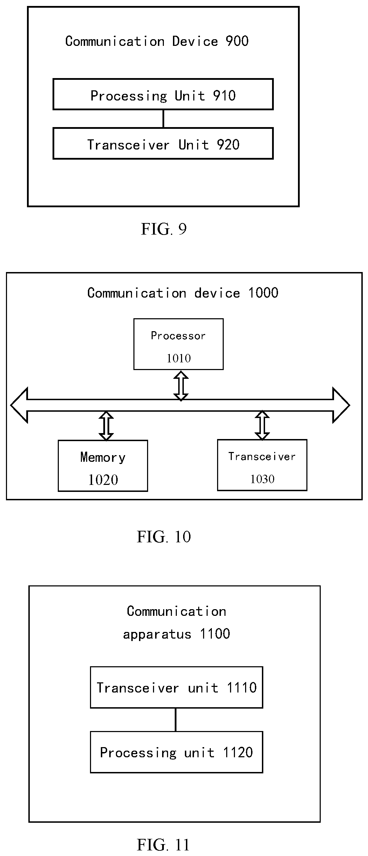

For example, Figure 9 illustrates a schematic block diagram of a communication apparatus 900 provided by an embodiment of the present application. The communication apparatus 900 may correspond to the first network device described in the various embodiments of the method 500 described above, or may be a chip or component applied to the first network device. The various modules or units of the communication apparatus 900 are respectively configured to perform the respective actions or processing procedures of the first network device described in the various embodiments of the method 500 described above.

As shown in Figure 9, the communication apparatus 900 comprises a transceiver unit 910 and a processing unit 920. The transceiver unit 910 is configured to perform specific signal transmission and reception under the driving of the processing unit 920.

In some embodiments:

The transceiver unit 910 is configured to send first indication information to a first terminal device. The first indication information indicates at least one of: resource allocation for the first terminal device on at least one first resource of a first frequency resource, first filter information, or first antenna information. The first frequency resource comprises a plurality of first resources, and any two first resources among the plurality of first resources are non-contiguous.

The communication apparatus provided by the present application may adjust allocation positions of frequency resources for the first terminal device and indicate the first filter information and the first antenna information for the first terminal device to receive signals, such that the first terminal device may obtain resource allocation positions on at least one first resource as well as filter information for receiving signals on the at least one first resource or the first antenna information for receiving signals on the at least one first resource, thereby eliminating interference from a different operator on the received signal of the first terminal device.

Optionally, the first filter information comprises one or more filter bandwidths, and the one or more filter bandwidths comprise a frequency resource size of at least one first resource or a frequency resource size of allocated resources on at least one first resource.

Optionally, a first association relationship exists between the one or more filter bandwidths and the first resource or the allocated resources on the first resource.

Optionally, the first antenna information comprises one or more of the following: antenna port, precoding information, Transmission Configuration Indication (TCI), Sounding Reference Signal (SRS) request, and Demodulation Reference Signal (DMRS) sequence initialization information. The number of the first antenna information is one or more, and the first antenna information is applied to at least one first resource or allocated resources of at least one first resource.

Optionally, a second association relationship exists between the one or more first antenna information and the first resource or the allocated resources on the first resource.

Optionally, when interference is greater than or greater than or equal to a first threshold, the resource allocation on the at least one first resource of the first frequency resource comprises: allocating resources on one first resource among the plurality of first resources, and the first filter information comprises: the bandwidth of the filter comprises a frequency resource size of one first resource or a frequency resource size of allocated resources on one first resource.

Optionally, when interference is greater than or greater than or equal to a first threshold, the resource allocation on the at least one first resource of the first frequency resource comprises: allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information.

Optionally, the two first resources or the allocated resources on the two first resources correspond to different antenna ports.

Optionally, the sum of the number of antenna ports corresponding to the two first resources or the allocated resources on the two first resources is less than or less than or equal to a maximum number of antenna ports of the first terminal device.

Optionally, the transceiver unit 910 is further configured to send second indication information to the first terminal device. The second indication information indicates the first terminal device to measure and report interference of the second network device on the received signal of the first terminal device. The first network device belongs to a first operator, the second network device belongs to a second operator, the first terminal device communicates on the first operator, the first frequency resource comprises the frequency resources occupied by the first operator and the frequency resources occupied by the second operator, and the frequency resources occupied by the first operator on the first frequency resource are non-contiguous.

It should be understood that the specific process in which each unit of the communication apparatus 900 performs the corresponding steps above may refer to the descriptions related to the first network device in the embodiments related to the method 500 and Figures 2 and 5 described above. For example, the transceiver unit 910 may perform the receiving and sending steps involved in the method embodiments above, and the processing unit 920 may perform steps other than transmission and reception. Various specific processing methods are as described in the method embodiments. For the sake of brevity, they will not be repeated here.

It should be understood that the communication apparatus may further comprise a storage unit configured to store instructions executed by the transceiver unit 910 and the processing unit 920. The transceiver unit 910, the processing unit 920, and the storage unit are coupled to each other. The storage unit stores instructions, the processing unit 920 is configured to execute the instructions stored in the storage unit, and the transceiver unit 910 is configured to perform specific signal transmission and reception under the driving of the processing unit 920.

It should be understood that the transceiver unit 910 may be a transceiver, an input/output interface, or an interface circuit. The storage unit may be a memory. The processing unit 920 may be implemented by a processor. Figure 10 illustrates a schematic block diagram of another example communication apparatus 1000 provided by an embodiment of the present application. As shown in Figure 10, the communication apparatus 1000 may comprise a processor 1010, a memory 1020, and a transceiver 1030.

The communication apparatus 900 shown in Figure 9 or the communication apparatus 1000 shown in Figure 10 can implement the steps performed by the first network device in the method 500 described above. Similar descriptions may refer to the descriptions in the corresponding methods above. To avoid repetition, they will not be repeated here.

It should also be understood that the communication apparatus 900 shown in Figure 9 or the communication apparatus 1000 shown in Figure 10 may be a first network device.

Figure 11 illustrates a schematic block diagram of a communication apparatus 1100 provided by an embodiment of the present application. The communication apparatus 1100 may correspond to the first terminal device described in the method 500 above, or may be a chip or component applied to the first terminal device. The various modules or units of the communication apparatus 1100 are respectively configured to perform the respective actions or processing procedures of the first terminal device in the method 500 described above.

As shown in Figure 11, the communication apparatus 1100 may comprise a transceiver unit 1110 and a processing unit 1120. The transceiver unit 1110 is configured to perform specific signal transmission and reception under the driving of the processing unit 1120.

In some embodiments:
The transceiver unit 1110 is configured to receive first indication information from the first network device. The first indication information indicates at least one of: resource allocation for the first terminal device on at least one first resource of a first frequency resource, first filter information, or first antenna information. The first frequency resource comprises a plurality of first resources, and any two first resources among the plurality of first resources are non-contiguous.

The processing unit 1120 is configured to determine at least one of the following based on the first indication information: resource allocation information on at least one first resource of the first frequency resource, the first filter information for receiving signals on the at least one first resource, or the first antenna information for receiving signals on the at least one first resource.

The communication apparatus provided by the present application may receive, from the first network device, allocation positions of frequency resources on at least one first resource as well as the first filter information for receiving signals on the at least one first resource and the first antenna information for receiving signals on the at least one first resource. Based on the resource allocation positions on the at least one first resource as well as the filter information for receiving signals on the at least one first resource or the first antenna information for receiving signals on the at least one first resource, interference from a different operator can be eliminated when receiving signals.

Optionally, the first frequency resource comprises a plurality of first resources, and any two first resources are non-contiguous.

Optionally, the first filter information comprises one or more filter bandwidths, and the one or more filter bandwidths comprise a frequency resource size of at least one first resource or a frequency resource size of allocated resources on at least one first resource.

Optionally, a first association relationship exists between the one or more filter bandwidths and the first resource or the allocated resources on the first resource.

Optionally, the first antenna information comprises one or more of the following: antenna port, precoding information, Transmission Configuration Indication (TCI), Sounding Reference Signal (SRS) request, and Demodulation Reference Signal (DMRS) sequence initialization information. The number of the first antenna information is one or more, and the first antenna information is applied to at least one first resource or allocated resources of at least one first resource.

Optionally, a second association relationship exists between the one or more first antenna information and the first resource or the allocated resources on the first resource.

Optionally, when interference is greater than or greater than or equal to a first threshold, the resource allocation on the at least one first resource of the first frequency resource comprises: allocating resources on one first resource among the plurality of first resources, and the first filter information comprises: the bandwidth of the filter comprises a frequency resource size of one first resource or a frequency resource size of allocated resources on one first resource.

Optionally, when interference is greater than or greater than or equal to a first threshold, the resource allocation on the at least one first resource of the first frequency resource comprises: allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information.

Optionally, the two first resources or the allocated resources on the two first resources correspond to different antenna ports.

Optionally, the sum of the number of antenna ports corresponding to the two first resources or the allocated resources on the two first resources is less than or less than or equal to a maximum number of antenna ports of the first terminal device.

Optionally, the transceiver unit 1110 is further configured to receive second indication information from the first network device.

Optionally, the transceiver unit 1110 is further configured to measure and report interference from the second network device to the received signal of the first terminal device based on the second indication information. The first network device belongs to a first operator, the second network device belongs to a second operator, the first terminal device communicates on the first operator, the first frequency resource comprises the frequency resources occupied by the first operator and the frequency resources occupied by the second operator, and the frequency resources occupied by the first operator on the first frequency resource are non-contiguous.

It should be understood that the specific process in which each unit of the communication apparatus 1100 performs the corresponding steps above may refer to the descriptions related to the terminal device in the embodiments related to the method 500 described above. For example, the transceiver unit 1110 may perform the receiving and sending steps involved in the method embodiments above, and the processing unit 1120 may perform steps other than transmission and reception. Various specific processing methods are as described in the method embodiments. For the sake of brevity, they will not be repeated here.

Optionally, the transceiver unit 1110 may comprise a receiving unit (module) and a sending unit (module), configured to perform the steps of the first terminal device receiving information and sending information in the various embodiments of the method 500 described above.

It should be understood that the transceiver unit 1110 may be a transceiver, an input/output interface, or an interface circuit. The storage unit may be a memory. The processing unit 1120 may be implemented by a processor.

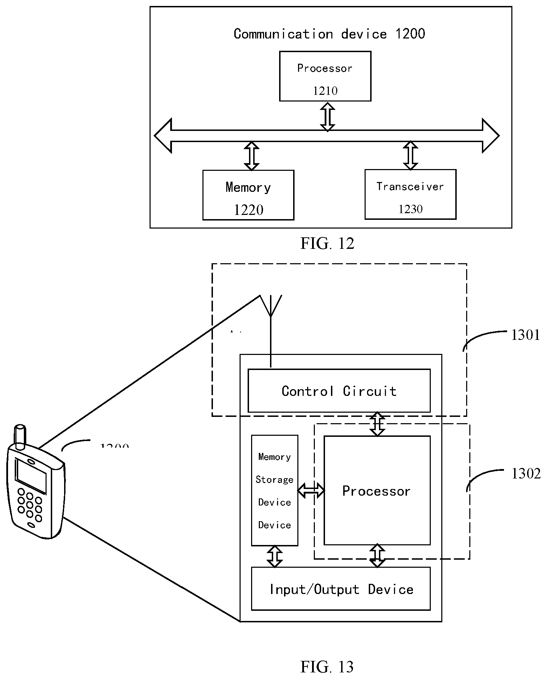

Figure 12 illustrates a schematic block diagram of another example communication apparatus 1200 provided by an embodiment of the present application. As shown in Figure 12, the communication apparatus 1200 may comprise a processor 1210, a memory 1220, and a transceiver 1230.

The communication apparatus 1100 shown in Figure 11 or the communication apparatus 1200 shown in Figure 12 can implement the steps performed by the first terminal device in the embodiments of the method 500 described above. Similar descriptions may refer to the descriptions in the corresponding methods above. To avoid repetition, they will not be repeated here.

It should also be understood that the communication apparatus 1100 shown in Figure 11 or the communication apparatus 1200 shown in Figure 12 may be a terminal device.

It should also be understood that the division of units in the above apparatus is merely a division of logical functions. In actual implementation, they may be fully or partially integrated into one physical entity, or may be physically separate. Furthermore, the units in the apparatus may be fully implemented in the form of software invoked by a processing element; they may also be fully implemented in the form of hardware; or some units may be implemented in the form of software invoked by a processing element, and some units may be implemented in the form of hardware. For example, each unit may be a processing element separately established, or may be integrated in a certain chip of the apparatus to implement. Furthermore, they may also be stored in a memory in the form of a program, and a certain processing element of the apparatus is invoked to execute the functions of the unit. The processing element here may also be referred to as a processor, which may be an integrated circuit having signal processing capability. In the implementation process, the various steps of the above method or the various units may be implemented by an integrated logic circuit of hardware in a processor element, or may be implemented in the form of software invoked by a processing element.

In one example, the units in any of the above apparatuses may be one or more integrated circuits configured to implement the above method, such as: one or more Application-Specific Integrated Circuits (ASICs), or one or more Digital Signal Processors (DSPs), or one or more Field Programmable Gate Arrays (FPGAs), or a combination of at least two of these integrated circuit forms. For another example, when the units in the apparatus may be implemented in the form of a processing element invoking a program, the processing element may be a general-purpose processor, such as a Central Processing Unit (CPU) or another processor capable of invoking a program. For another example, these units may be integrated together and implemented in the form of a System-on-a-Chip (SoC).

Figure 13 is a structural schematic diagram of a terminal device 1300 provided by the present application, which may be used to implement the function of the first terminal device in the above method. The communication apparatus 1100 or the communication apparatus 1200 described above may be configured in the terminal device 1300. Alternatively, the communication apparatus 1100 or the communication apparatus 1200 itself may be the terminal device 1300. That is, the terminal device 1300 may perform the actions executed by the first terminal device in the method 500 described above. Optionally, for ease of description, Figure 13 only shows the main components of the terminal device. As shown in Figure 13, the terminal device 1300 comprises a processor, a memory, a control circuit, an antenna, and an input/output device.

The processor is mainly configured to process communication protocols and communication data, and to control the entire terminal device, execute software programs, and process software program data, such as for supporting the terminal device to perform the actions described in the embodiments of the method for indicating a transmission precoding matrix described above. The memory is mainly configured to store software programs and data, such as storing the codebook described in the above embodiments. The control circuit is mainly configured to convert between baseband signals and radio frequency signals, and to process radio frequency signals. The control circuit and the antenna may also be referred to together as a transceiver, which is mainly configured to receive and transmit radio frequency signals in the form of electromagnetic waves. The input/output device, such as a touchscreen, a display, a keyboard, etc., is mainly configured to receive data input by a user and output data to the user.

When the terminal device is powered on, the processor may read the software program in the storage unit, interpret and execute the instructions of the software program, and process the data of the software program. When data needs to be sent wirelessly, the processor performs baseband processing on the data to be sent, outputs the baseband signal to the radio frequency circuit, and the radio frequency circuit performs radio frequency processing on the baseband signal and then transmits the radio frequency signal outward in the form of electromagnetic waves through the antenna. When data is sent to the terminal device, the radio frequency circuit receives the radio frequency signal through the antenna, converts the radio frequency signal into a baseband signal, and outputs the baseband signal to the processor. The processor converts the baseband signal into data and processes the data.

Those skilled in the art may understand that, for ease of description, Figure 13 only shows one memory and one processor. In an actual terminal device, there may be multiple processors and memories. The memory may also be referred to as a storage medium or a storage device. The embodiments of the present application impose no limitation in this regard.

For example, the processor may comprise a baseband processor and a central processing unit. The baseband processor is mainly configured to process communication protocols and communication data. The central processing unit is mainly configured to control the entire terminal device, execute software programs, and process software program data. Those skilled in the art may understand that the baseband processor and the central processing unit may also be independent processors interconnected by bus technology. Those skilled in the art may understand that the terminal device may comprise multiple baseband processors to adapt to different network standards. The terminal device may comprise multiple central processing units to enhance its processing capability. The various components of the terminal device may be connected through various buses. The baseband processor may also be referred to as a baseband processing circuit or a baseband processing chip. The central processing unit may also be referred to as a central processing circuit or a central processing chip. The function of processing communication protocols and communication data may be built into the processor, or may be stored in a storage unit in the form of a software program, with the processor executing the software program to implement the baseband processing function.

For example, in the embodiments of the present application, the antenna and the control circuit having a transceiving function may be regarded as a transceiver unit 1301 of the terminal device 1300, and the processor having a processing function may be regarded as a processing unit 1302 of the terminal device 1300. As shown in Figure 13, the terminal device 1300 comprises a transceiver unit 1301 and a processing unit 1302. The transceiver unit may also be referred to as a transceiver, a transceiver machine, a transceiver apparatus, etc. Optionally, the device for implementing the receiving function in the transceiver unit 1301 may be regarded as a receiving unit, and the device for implementing the sending function in the transceiver unit 1301 may be regarded as a sending unit. That is, the transceiver unit 1301 comprises a receiving unit and a sending unit. For example, the receiving unit may also be referred to as a receiver, a receiving device, a receiving circuit, etc., and the sending unit may be referred to as a transmitter, a transmitting device, or a transmitting circuit, etc.

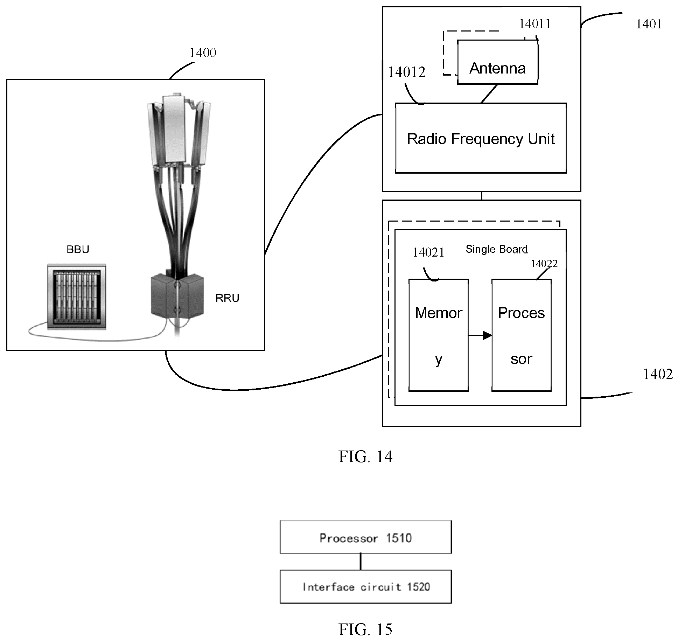

Figure 14 is a structural schematic diagram of a network device 1400 provided by an embodiment of the present application, which may be used to implement the function of the network device in the above method. The network device 1400 comprises one or more radio frequency units, such as a Remote Radio Unit (RRU) 1401 and one or more Baseband Units (BBU) (also referred to as Digital Units, DU) 1402. The RRU 1401 may be referred to as a transceiver unit, a transceiver, a transceiving circuit, or a transceiver, etc. It may comprise at least one antenna 14011 and a radio frequency unit 14012. The RRU 1401 part is mainly configured to receive and transmit radio frequency signals and to convert between radio frequency signals and baseband signals, such as for sending the signaling messages in the above embodiments to the terminal device. The BBU 1402 part is mainly configured to perform baseband processing and control the base station. The RRU 1401 and the BBU 1402 may be physically disposed together, or may be physically separated, that is, a distributed base station.

The BBU 1402 is a control center of the base station, and may also be referred to as a processing unit. It is mainly configured to complete baseband processing functions, such as channel coding, multiplexing, modulation, spreading, etc. For example, the BBU (processing unit) 1402 may be configured to control the base station to perform the operation flow of the first network device in the method embodiments described above.

In one example, the BBU 1402 may be constituted by one or more boards. The multiple boards may jointly support a wireless access network of a single access standard (such as an LTE system or a 5G system), or may respectively support wireless access networks of different access standards. The BBU 1402 further comprises a memory 14021 and a processor 14022. The memory 14021 is configured to store necessary instructions and data. For example, the memory 14021 stores the codebook described in the above embodiments. The processor 14022 is configured to control the base station to perform necessary actions, such as for controlling the base station to perform the operation flow of the network device in the method embodiments described above. The memory 14021 and the processor 14022 may serve one or more boards. That is, a memory and a processor may be separately disposed on each board. Alternatively, multiple boards may share the same memory and processor. Furthermore, each board may also be provided with necessary circuits.

In one possible implementation, with the development of System-on-Chip (SoC) technology, all or part of the functions of the 1402 part and the 1401 part may be implemented by SoC technology, such as being implemented by a base station function chip. The base station function chip integrates a processor, a memory, an antenna interface, and other devices. A program for base station-related functions is stored in the memory, and the processor executes the program to implement the related functions of the base station. Optionally, the base station function chip can also read a memory external to the chip to implement the related functions of the base station.

It should also be understood that the division of units in the above apparatus is merely a division of logical functions. In actual implementation, they may be fully or partially integrated into one physical entity, or may be physically separate. Furthermore, the units in the apparatus may be fully implemented in the form of software invoked by a processing element; they may also be fully implemented in the form of hardware; or some units may be implemented in the form of software invoked by a processing element, and some units may be implemented in the form of hardware. For example, each unit may be a processing element separately established, or may be integrated in a certain chip of the apparatus to implement. Furthermore, they may also be stored in a memory in the form of a program, and a certain processing element of the apparatus is invoked to execute the functions of the unit. The processing element here may also be referred to as a processor, which may be an integrated circuit having signal processing capability. In the implementation process, the various steps of the above method or the various units may be implemented by an integrated logic circuit of hardware in a processor element, or may be implemented in the form of software invoked by a processing element. In one example, the units in any of the above apparatuses may be one or more integrated circuits configured to implement the above method, such as: one or more Application-Specific Integrated Circuits (ASICs), or one or more Digital Signal Processors (DSPs), or one or more Field Programmable Gate Arrays (FPGAs), or a combination of at least two of these integrated circuit forms. For another example, when the units in the apparatus may be implemented in the form of a processing element invoking a program, the processing element may be a general-purpose processor, such as a Central Processing Unit (CPU) or another processor capable of invoking a program. For another example, these units may be integrated together and implemented in the form of a System-on-a-Chip (SoC).

The embodiments of the present application further provide a chip system, as shown in Figure 15. The chip system comprises at least one processor 1510 and at least one interface circuit 1520. The processor 1510 and the interface circuit 1520 are interconnected via a line. For example, the interface circuit 1520 may be configured to receive signals from other devices (e.g., a memory of the terminal device 1200). For another example, the interface circuit 1520 may be configured to send signals to other devices (e.g., the processor 1510). For example, the interface circuit 1520 may read instructions stored in a memory and send the instructions to the processor 1510. When the instructions are executed by the processor 1510, the terminal device may perform the various steps executed by the terminal device in the above embodiments. Of course, the chip system may further comprise other discrete devices. The embodiments of the present application impose no specific limitation in this regard.

The embodiments of the present application further provide a communication system. The system comprises: a network device (e.g., the first network device) and a terminal device (e.g., the first terminal device, etc.) provided in the method embodiments described above.

The embodiments of the present application further provide a computer-readable storage medium for storing computer program code. The computer program comprises instructions for performing the method for interference cancellation according to any of the above embodiments. The readable medium may be a Read-Only Memory (ROM) or a Random Access Memory (RAM). The embodiments of the present application impose no limitation in this regard.

The present application further provides a computer program product. The computer program product comprises instructions, which, when executed, cause the first network device and the first terminal device to perform the corresponding operations in the above methods.

The embodiments of the present application further provide a chip located in a communication apparatus. The chip comprises: a processing unit and a communication unit. The processing unit, for example, may be a processor, and the communication unit, for example, may be an input/output interface, a pin, or a circuit, etc. The processing unit is configured to execute a computer program to cause the communication device equipped with the chip to perform the method for interference cancellation according to any of the above embodiments.

Optionally, the computer program is stored in a storage unit.

Optionally, the storage unit is a storage unit inside the chip, such as a register, a cache, etc. The storage unit may also be a storage unit located outside the chip in the terminal, such as a ROM or another type of static storage device capable of storing static information and instructions, a Random Access Memory (RAM), etc. The processor mentioned at any of the above locations may be a CPU, a microprocessor, an ASIC, or one or more integrated circuits for controlling the execution of the program of the method for feedback information transmission described above. The processing unit and the storage unit may be decoupled and respectively disposed on different physical devices, and connected by wired or wireless means to implement the respective functions of the processing unit and the storage unit to support the system chip in implementing the various functions in the above embodiments. Alternatively, the processing unit and the memory may also be coupled on the same device.

The storage medium in the embodiments of the present application may be a volatile memory or a non-volatile memory, or may comprise both volatile and non-volatile memory. The non-volatile memory may be a ROM, a Programmable ROM (PROM), an Erasable PROM (EPROM), an Electrically EPROM (EEPROM), or a flash memory. The volatile memory may be a RAM, which serves as an external high-speed cache. There are many different types of RAM, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchronous Link DRAM (SLDRAM), and a Direct Rambus RAM (DR RAM).

Any message/information/device/network element/system/apparatus/action/operation/process/concept or the like that may appear in the present application has been given a name. It should be understood that these specific names do not constitute a limitation on the relevant object. The assigned names may change with scenarios, contexts, usage habits, and other factors. The understanding of the technical meaning of the technical terms in the present application should primarily be determined based on the functions and technical effects embodied/performed by the technical terms in the technical solution.

In the various embodiments of the present application, unless otherwise specified and unless there is a logical conflict, terms and/or descriptions between different embodiments have consistency and may be cross-referenced. Technical features in different embodiments may be combined to form new embodiments based on their inherent logical relationships.

Those of ordinary skill in the art may realize that the units and algorithm steps described in connection with the embodiments disclosed herein may be implemented in electronic hardware, or in a combination of computer software and electronic hardware. Whether these functions are performed by hardware or software depends on the particular application and design constraints of the technical solution. Professional technicians may use different methods for each specific application to implement the described functions, but such implementation should not be considered as going beyond the scope of the present application.

The methods in the embodiments of the present application may be fully or partially implemented by software, hardware, firmware, or any combination thereof. When implemented using software, the embodiments may be fully or partially implemented in the form of a computer program product. The computer program product comprises one or more computer programs or instructions. When the computer program or instructions are loaded and executed on a computer, all or part of the processes or functions described in the embodiments of the present application are generated. The computer may be a general-purpose computer, a special-purpose computer, a computer network, or other programmable devices. The computer program or instructions may be stored on a computer-readable storage medium or transmitted via the computer-readable storage medium. The computer-readable storage medium may be any usable medium accessible by a computer or an integrated data storage device such as a server comprising one or more usable media.

Those skilled in the art may clearly understand that, for the convenience and brevity of description, the specific working processes of the systems, apparatuses, and units described above may refer to the corresponding processes in the method embodiments, and will not be repeated here.

In the several embodiments provided in the present application, it should be understood that the disclosed systems, apparatuses, and methods may be implemented in other manners. For example, the apparatus embodiments described above are merely schematic. For example, the division of the units is merely a division of logical functions. In actual implementation, there may be other division manners. For example, multiple units or components may be combined or may be integrated into another system, or some features may be omitted or not executed. Furthermore, the coupling or direct coupling or communication connection shown or discussed may be indirect coupling or communication connection through some interfaces, apparatuses, or units, and may be electrical, mechanical, or in other forms.

The units described as separate components may or may not be physically separate. The components shown as units may or may not be physical units, that is, they may be located in one place, or may be distributed on multiple network units. Some or all of the units may be selected according to actual needs to achieve the objectives of the embodiments of the present solution.

Furthermore, the various functional units in the various embodiments of the present application may be integrated into one processing unit, or each unit may exist separately physically, or two or more units may be integrated into one unit.

If the functions are implemented in the form of software functional units and sold or used as independent products, they may be stored in a computer-readable storage medium. Based on such understanding, the technical solution of the present application essentially or the part contributing to the prior art, or part of the technical solution, may be embodied in the form of a software product. The computer software product is stored in a readable storage medium, comprising several instructions for causing a computer device (which may be a personal computer, a server, or a network device, etc.) to execute all or part of the steps of the method described in the various embodiments of the present application. The foregoing readable storage medium comprises: a USB flash drive, a mobile hard disk, a ROM, a RAM, a magnetic disk, an optical disc, or other media capable of storing program code.

The above is merely a specific implementation manner of the present application, but the protection scope of the present application is not limited thereto. Any person skilled in the art could readily conceive of changes or substitutions within the technical scope disclosed in the present application, which should all be covered within the protection scope of the present application. Therefore, the protection scope of the present application shall be subject to the protection scope of the claims.

## Claims

1. A method for interference cancellation, wherein the method is applied to a first network device, and the method comprises:
sending, first indication information to a first terminal device, wherein the first indication information indicates at least one of: resource allocation for the first terminal device on at least one first resource of a first frequency resource, first filter information, or first antenna information, wherein the first frequency resource comprises a plurality of first resources, and any two first resources among the plurality of first resources are non-contiguous.

2. The method according to claim 1, wherein the first filter information comprises one or more filter bandwidths, and the one or more filter bandwidths comprise a frequency resource size of at least one first resource or a frequency resource size of allocated resources on at least one first resource.

3. The method according to claim 1 or 2, wherein a first association relationship exists between the one or more filter bandwidths and the first resource or the allocated resources on the first resource.

4. The method according to any one of claims 1-3, wherein the first antenna information comprises one or more of the following: antenna port, precoding information, Transmission Configuration Indication (TCI), Sounding Reference Signal (SRS) request, and Demodulation Reference Signal (DMRS) sequence initialization information, wherein the number of the first antenna information is one or more, and the first antenna information is applied to at least one first resource or allocated resources of at least one first resource.

5. The method according to any one of claims 1-4, wherein a second association relationship exists between the one or more first antenna information and the first resource or the allocated resources on the first resource.

6. The method according to any one of claims 1-5, wherein when interference is greater than or greater than or equal to a first threshold, the resource allocation on the at least one first resource of the first frequency resource comprises: allocating resources on one first resource among the plurality of first resources, and the first filter information comprises: the bandwidth of the filter comprises a frequency resource size of one first resource or a frequency resource size of allocated resources on one first resource.

7. The method according to any one of claims 1-6, wherein when interference is greater than or greater than or equal to a first threshold, the resource allocation on the at least one first resource of the first frequency resource comprises:
allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information.

8. The method according to claim 7, wherein the two first resources or the allocated resources on the two first resources correspond to different antenna ports.

9. The method according to claim 8, wherein the sum of the number of antenna ports corresponding to the two first resources or the allocated resources on the two first resources is less than or less than or equal to a maximum number of antenna ports of the first terminal device.

10. The method according to any one of claims 1-9, wherein the method further comprises:
sending, second indication information to the first terminal device, wherein the second indication information indicates the first terminal device to measure and report interference of a second network device on a received signal of the first terminal device, wherein the first network device belongs to a first operator, the second network device belongs to a second operator, the first terminal device communicates on the first operator, the first frequency resource comprises the frequency resources occupied by the first operator and the frequency resources occupied by the second operator, and the frequency resources occupied by the first operator on the first frequency resource are non-contiguous.

11. A method for interference cancellation, wherein the method is applied to a first terminal device, and the method comprises:
receiving first indication information from a first network device, wherein the first indication information indicates at least one of: resource allocation for the first terminal device on at least one first resource of a first frequency resource, first filter information, or first antenna information, wherein the first frequency resource comprises a plurality of first resources, and any two first resources among the plurality of first resources are non-contiguous; and
determining at least one of the following based on the first indication information: resource allocation information on at least one first resource of the first frequency resource, the first filter information for receiving signals on the at least one first resource, or the first antenna information for receiving signals on the at least one first resource.

12. The method according to claim 11, wherein the first filter information comprises one or more filter bandwidths, and the one or more filter bandwidths comprise a frequency resource size of at least one first resource or a frequency resource size of allocated resources on at least one first resource.

13. The method according to claim 11 or 12, wherein a first association relationship exists between the one or more filter bandwidths and the first resource or the allocated resources on the first resource.

14. The method according to any one of claims 11-13, wherein the first antenna information comprises one or more of the following: antenna port, precoding information, Transmission Configuration Indication (TCI), Sounding Reference Signal (SRS) request, and Demodulation Reference Signal (DMRS) sequence initialization information, wherein the number of the first antenna information is one or more, and the first antenna information is applied to at least one first resource or allocated resources of at least one first resource.

15. The method according to any one of claims 11-14, wherein a second association relationship exists between the one or more first antenna information and the first resource or the allocated resources on the first resource.

16. The method according to any one of claims 11-15, wherein when interference is greater than or greater than or equal to a first threshold, the resource allocation on the at least one first resource of the first frequency resource comprises:
allocating resources on one first resource among the plurality of first resources, and the first filter information comprises: the bandwidth of the filter comprises a frequency resource size of one first resource or a frequency resource size of allocated resources on one first resource.

17. The method according to any one of claims 11-15, wherein when interference is greater than or greater than or equal to a first threshold, the resource allocation on the at least one first resource of the first frequency resource comprises:
allocating resources on two first resources among the plurality of first resources, the first filter information comprises: the bandwidth of the filter comprises a frequency resource size of one first resource or a frequency resource size of allocated resources on one first resource, wherein the two first resources each correspond to one first antenna information.

18. The method according to claim 17, wherein the two first resources or the allocated resources on the two first resources correspond to different antenna ports.

19. The method according to claim 18, wherein the sum of the number of antenna ports corresponding to the two first resources or the allocated resources on the two first resources is less than or less than or equal to a maximum number of antenna ports of the first terminal device.

20. The method according to any one of claims 11-19, wherein the method further comprises:
receiving second indication information from the first network device; measuring and reporting interference from a second network device to a received signal of the first terminal device based on the second indication information, wherein the first network device belongs to a first operator, the second network device belongs to a second operator, the first terminal device communicates on the first operator, the first frequency resource comprises the frequency resources occupied by the first operator and the frequency resources occupied by the second operator, and the frequency resources occupied by the first operator on the first frequency resource are non-contiguous.

21. A communication apparatus, wherein the apparatus comprises at least one processor, the at least one processor being coupled to at least one memory: the at least one processor being configured to execute a computer program or instructions in the at least one memory, such that the method according to any one of claims 1 to 10 is executed, or such that the method according to any one of claims 11 to 20 is executed.

22. A computer-readable storage medium, wherein a computer program or instructions are stored on the computer-readable storage medium, which, when read and executed by a computer, cause the computer to execute the method according to any one of claims 1 to 10, or execute the method according to any one of claims 11 to 20.

23. A chip, wherein it comprises: a processor, configured to execute the method according to any one of claims 1 to 10, or execute the method according to any one of claims 11 to 20.
